# EUROPEAN PATENT SPECIFICATION

(11) **EP 3 365 408 B1**
(45) Date of publication and mention of the grant of the patent: **04.11.2020**
(21) Application number: 17835270.4
(22) Date of filing: 27.07.2017
(51) Int. Cl.: C09K 5/04, F25B 9/00, B60H 1/32

(54) **HEAT TRANSFER COMPOSITIONS, METHODS AND SYSTEMS**
WÄRMETRANSFERZUSAMMENSETZUNGEN, VERFAHREN UND SYSTEME
COMPOSITIONS, PROCÉDÉS ET SYSTÈMES DE TRANSFERT DE CHALEUR

(30) Priority: 29.07.2016 US 201662368521 P; 05.05.2017 US 201762502231 P; 05.05.2017 US 201762502165 P
(43) Date of publication of application: 29.08.2018
(73) Proprietor: Honeywell International Inc., Morris Plains, NJ 07950 (US)
(72) Inventor: SETHI, Ankit, Morris Plains NJ New Jersey 07950 (US); YANA MOTTA, Samuel, F., East Amherst NY 14051 (US); POTTKER, Gustavo, Getzville NY 14068 (US); SMITH, Gregory, Laurence, Niagara Falls Ontario L2J 4A6 (CA); VERA BECERRA, Elizabet Del Carmen, Amherst NY 14228 (US); ZOU, Yang, Buffalo NY 14210 (US); CLOSE, Joshua, Cheektowaga NY 14227 (US)
(74) Representative: Crooks, Elizabeth Caroline
(86) International application number: PCT/US2017/044182
(87) International publication number: WO 2018/022888

(56) References cited:
- WO-A2-2008/061079
- JP-A- H08 277 389
- US-A- 5 605 647
- US-A1- 2010 044 619
- US-A1- 2010 044 619
- US-A1- 2010 257 881
- US-A1- 2012 204 594
- US-A1- 2014 048 737

## Description

### Field of the Invention

The present invention relates to compositions, methods and systems having utility in heat exchange systems, including air conditioning and refrigeration applications and in particular aspects to compositions useful in heat transfer systems of the type in which the refrigerant R-410A would have been used, that is as a replacement of the refrigerant R-410A for heating and cooling applications and to retrofitting heat exchange systems, including systems designed for use with R-410A.

### Background

Mechanical refrigeration systems, and related heat transfer devices, such as heat pumps and air conditioners are well known in the art for industrial, commercial and domestic uses. Chlorofluorocarbons (CFCs) were developed in the 1930s as refrigerants for such systems. However, since the 1980s, the effect of CFCs on the stratospheric ozone layer has become the focus of much attention. In 1987, a number of governments signed the Montreal Protocol to protect the global environment, setting forth a timetable for phasing out the CFC products. CFCs were replaced with more environmentally acceptable materials that contain hydrogen, namely the hydrochlorofluorocarbons (HCFCs).

One of the most commonly used hydrochlorofluorocarbon refrigerants was chlorodifluoromethane (HCFC-22). However, subsequent amendments to the Montreal protocol accelerated the phase out of the CFCs and also scheduled the phase-out of HCFCs, including HCFC-22.

In response to the requirement for a non-flammable, non-toxic alternative to the CFCs and HCFCs, industry has developed a number of hydrofluorocarbons (HFCs) which have zero ozone depletion potential. R-410A (a 50:50 w/w blend of difluoromethane (HFC-32) and pentafluoroethane (HFC-125)) was adopted as the industry replacement for HCFC-22 in air conditioning and chiller applications as it does not contribute to ozone depletion. However, R-410A is not a drop-in replacement for R-22. Thus, the replacement of R-22 with R-410A required the redesign of major components within heat exchange systems, including the replacement and redesign of the compressor to accommodate the higher operating pressure and volumetric capacity of R-410A, when compared with R-22.

While R-410A has a more acceptable Ozone Depleting Potential (ODP) than R-22, the continued use of R-410A is problematic, due to it's high Global Warming Potential of 2088. There is therefore a need in the art for the replacement of R-410A with a more environmentally acceptable alternative.

It is understood in the art that it is highly desirable for a replacement heat transfer fluid to possess a difficult to achieve mosaic of properties including excellent heat transfer properties and in particular heat transfer properties that are well matched to the needs of the particular application, chemical stability, low or no toxicity, non-flammability, lubricant miscibility and/or lubricant compatibility amongst others. In addition, any replacement for R-410A would ideally be a good match for the operating conditions of R-410A in order to avoid modification or redesign of the system. The development of a heat transfer fluid meeting all of these requirements, many of which are unpredictable is a significant challenge.

With regard to efficiency in use, it is important to note that a loss of refrigerant thermodynamic performance or energy efficiency may result in an increase in fossil fuel usage as a result of the increased demand for electrical energy. The use of such a refrigerant will therefore have a negative secondary environmental impact.

Flammability is considered to be an important, and in some cases, a critical property for many heat transfer applications. Thus, it is frequently beneficial to use compounds in such compositions to achieve, if possible a refrigerant, which is non-flammable. As used herein, the term "non-flammable" refers to compositions which are determined to be non-flammable in accordance with ASTM standard E-681-2001 at conditions described in ASHRAE Standard 34-2013 and described in Appendix B1 to ASHRAE Standard 34-2013.

It is critical for maintenance of system efficiency, and proper and reliable functioning of the compressor, that lubricant circulating in a vapour compression heat transfer system is returned to the compressor to perform its intended lubricating function. Otherwise, lubricant might accumulate and become lodged in the coils and piping of the system, including in the heat transfer components. Furthermore, when lubricant accumulates on the inner surfaces of the evaporator, it lowers the heat exchange efficiency of the evaporator, and thereby reduces the efficiency of the system.

R-410A is currently used with polyol ester (POE) lubricating oil in air conditioning applications, as R-410A is miscible with POE at temperatures experienced during use of such systems. However, R-410A is immiscible with POE at temperatures typically experienced during operation of low temperature refrigeration systems, and heat pump systems. Therefore, unless steps are taken to mitigate against this immiscibility, POE and R-410A cannot be used in low temperature refrigeration or heat pump systems.

It is therefore desirable to be able to provide compositions which are capable of being used as a replacement for R-410A in air conditioning applications. It is an additional benefit to be able to use the compositions of the invention in for example heat pump and low temperature refrigeration systems, wherein said compositions do not suffer the drawback of immiscibility with POE at temperatures experienced during operation of these systems.

US 2010/257881 A1, US 2010/044619 A1 and JP H08 277389 A each discloses other refrigerant compositions comprising iodotrifluoromethane.

### Summary

The present invention provides a refrigerant composition which can be used as a replacement for R-410A and which exhibits the desired mosaic of properties of excellent heat transfer properties, chemical stability, low or no toxicity, non-flammability, lubricant miscibility and/or lubricant compatibility in combination with an acceptable Global Warming Potential (GWP).

According to the present invention, the refrigerant consists of:
from 48% by weight to 51% by weight difluoromethane (HFC-32),
from 9.5% by weight to 11.5% by weight pentafluoroethane (HFC-125), and
from 36.5% by weight to 40.5% by weight trifluoroiodomethane (CF₃I), with the percentages being based on the total weight of these three compounds and wherein the amount of each compound can vary by an amount of ± 2% by weight, preferably ± 1% by weight, more preferably ± 0.5% by weight.

Also according to the present invention, the refrigerant consists of:
50% by weight difluoromethane (HFC-32),
11.5% by weight pentafluoroethane (HFC-125), and
38.5% by weight trifluoroiodomethane (CF₃I), with the percentages being based on the total weight of these three compounds and wherein the amount of each compound can vary by an amount of ± 2% by weight, preferably ± 1% by weight, more preferably ± 0.5% by weight.

### Brief Description of the Drawings

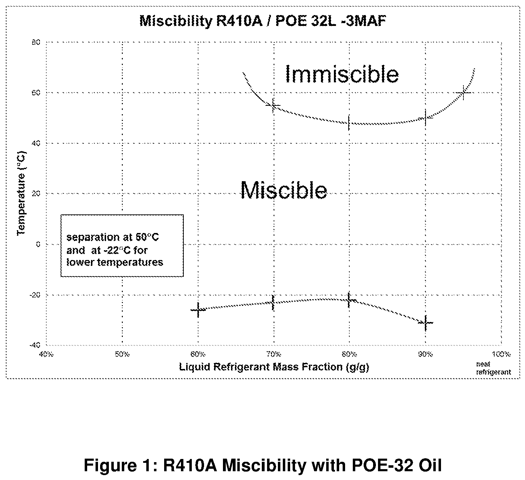

Figure 1 is a chart illustrating the miscibility of R410A with POE-32 Oil according to Example 15.

### Detailed Description

Applicants have found that the refrigerant of the present invention is capable of providing exceptionally advantageous properties in connection with a combination of two or more properties selected from: heat transfer properties, chemical stability, low or no toxicity, non-flammability and/or lubricant compatibility in combination with an acceptable Global Warming Potential (GWP), especially in connection with the use of the refrigerant of the present invention as a replacement for R-410A.

For the purposes of this invention, the term "about" in relation to the amounts expressed in weight percent means that the amount of the component can vary by an amount of +/- 2% by weight, preferably +/- 1% by weight, more preferably 0.5% by weight. The term "about", in relation to temperatures means that the stated temperature can vary by an amount of +/-5°C, preferably +/- 2°C and more preferably +/- 1°C, most preferably +/- 0.5°C.

A particular advantage of the refrigerants of the present invention is that they are non-flammable when tested in accordance with ASTM E681-2009 test procedure as required in ASHRAE Standard 34-2013 and described in Appendix B1 to ASHRAE Standard 34-2013.

Flammability is defined as the ability of a composition to ignite and/or propagate a flame. It will be appreciated by the skilled person that the flammability of a refrigerant is an important characteristic for use in many important heat transfer applications. Thus, it is a desire in the art to provide a refrigerant composition which can be used as a replacement for R-410A which has excellent heat transfer properties, chemical stability, low or no toxicity, and/or lubricant compatibility and which maintains non-flammability in use. This requirement is met by the refrigerants of the present invention.

The refrigerant can be incorporated into a heat transfer composition. There is provided heat transfer compositions, methods and systems which utilize in a heat transfer system that is useful with the refrigerant R-410A a refrigerant that has the important characteristic of at once providing in said system and/or in connection with said methods a refrigerant that:
(a) has an efficiency (COP) from about 95% to about 105%, preferably about 100% to about 105% of the efficiency of R410A in said system and/or used in said method; and
(b) is non-flammable as determined in accordance with ASTM E681-2009 test procedure as required in ASHRAE Standard 34-2013 and described in Appendix B1 to ASHRAE Standard 34-2013; such refrigerant consists of:
   from about 48% by weight to about 51% by weight difluoromethane (HFC-32),
   from about 9.5% by weight to about 11.5% by weight pentafluoroethane (HFC-125), and
   from about 36.5% by weight to about 40.5% by weight trifluoroiodomethane (CF₃I).

There is provided heat transfer compositions, methods and systems which utilize in a heat transfer system that is useful with the refrigerant R-410A a refrigerant that has the important characteristic of at once providing in said system and/or in connection with said methods a refrigerant that:
(a) has an efficiency (COP) from about 95% to about 105%, preferably about 100% to about 105% of the efficiency of R410A in said system and/or used in said method;
(b) has a capacity from about 95% to about 105%, preferably about 98% to about 105% of the capacity of R410A in said system and/or used in said method; and
(c) is non-flammable as determined in accordance with ASTM E681-2009 test procedure as required in ASHRAE Standard 34-2013 and described in Appendix B1 to ASHRAE Standard 34-2013; such refrigerant consists of:
   from about 48% by weight to about 51% by weight difluoromethane (HFC-32),
   from about 9.5% by weight to about 11.5% by weight pentafluoroethane (HFC-125), and
   from about 36.5% by weight to about 40.5% by weight trifluoroiodomethane (CF₃I).

There is provided heat transfer compositions, methods and systems which utilize in a heat transfer system that is useful with the refrigerant R-410A a refrigerant that has the important characteristic of at once providing in said system and/or in connection with said methods a refrigerant that:
(a) has an efficiency (COP) from about 95% to about 105%, preferably about 100% to about 105% of the efficiency of R410A in said system and/or used in said method;
(b) has a capacity from about 95% to about 105%, preferably about 98% to about 105% of the capacity of R410A in said system and/or used in said method;
(c) is non-flammable as determined in accordance with ASTM E681-2009 test procedure as required in ASHRAE Standard 34-2013 and described in Appendix B1 to ASHRAE Standard 34-2013;
(d) produces in the system and/or the methods a compressor discharge temperature that is not greater than 10°C higher than that of R-410A; and
(e) produces in the system and/or the methods a compressor pressure ratio that is from about 95% to about 105% of the compressor pressure ratio of R-410A; such refrigerant consists of:
   from about 48% by weight to about 51% by weight difluoromethane (HFC-32),
   from about 9.5% by weight to about 11.5% by weight pentafluoroethane (HFC-125), and
   from about 36.5% by weight to about 40.5% by weight trifluoroiodomethane (CF₃I).

The refrigerant can be incorporated into a heat transfer composition. Preferably, and according to the present invention the heat transfer composition comprises a refrigerant which consists of a blend of the following three compounds, with the following percentages being based on the total weight of the following three compounds::
from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I).

More preferably, and according to the present invention, the heat transfer composition comprises a refrigerant which consists of a blend of the following three compounds, with the following percentages being based on the total weight of the following three compounds:
about 50% by weight difluoromethane (HFC-32),
about 11.5% by weight pentafluoroethane (HFC-125), and
about 38.5% by weight trifluoroiodomethane (CF₃I).

Preferably, the heat transfer composition comprises the refrigerant in an amount of greater than 40% by weight of the heat transfer composition or greater than about 50% by weight of the heat transfer composition, or greater than 70% by weight of the heat transfer composition, or greater than 80% by weight of the heat transfer composition or greater than 90% by weight of the heat transfer composition. The heat transfer composition may consist essentially of the refrigerant.

The heat transfer compositions of the invention may include other components for the purpose of enhancing or providing certain functionality to the compositions. Such other components or additives may include one or more of lubricants, dyes, solubilizing agents, compatibilizers, stabilizers, antioxidants, corrosion inhibitors, extreme pressure additives and anti wear additives.

The heat transfer composition of the invention particularly comprises a refrigerant as discussed above and a stabilizer. Examples of preferred stabilizers include diene-based compounds and/or phenol-based compounds and/or phosphorus compounds and/or nitrogen compounds and/or epoxides selected from the group consisting of aromatic epoxides, alkyl epoxides, alkyenyl epoxides.

The stabilizer preferably is provided in the heat transfer composition in an amount of from about 0.001% by weight to about 5 % by weight, preferably about 0.01% by weight to about 2% by weight, more preferably from about 0.1 to about 1% by weight. In each case, percentage by weight refers to the weight of the heat transfer composition.

The diene-based compounds include C3 to C15 dienes and to compounds formed by reaction of any two or more C3 to C4 dienes. Preferably, the diene based compounds are selected from the group consisting of allyl ethers, propadiene, butadiene, isoprene and terpenes. The diene-based compounds are preferably terpenes, which include but are not limited to terebene, retinal, geraniol, terpinene, delta-3 carene, terpinolene, phellandrene, fenchene, myrcene, farnesene, pinene, nerol, citral, camphor, menthol, limonene, nerolidol, phytol, carnosic acid and vitamin A₁. Preferably, the stabilizer is farnesene.

Preferred terpene stabilizers are disclosed in US Provisional Patent Application No. 60/638,003 filed on December 12, 2004.

The diene based compounds can be provided in the heat transfer composition in an amount of from about 0.001% by weight to about 10 % by weight, preferably about 0.01% by weight to about 5% by weight more preferably from about 0.1 to about 2.5% by weight, and even more preferably from about 1 to about 2.5% by weight. In each case, percentage by weight refers to the weight of the heat transfer composition.

In addition, the diene based compounds can be provided in the heat transfer composition in an amount of from about 0.001% by weight to about 5% by weight, preferably about 0.01% by weight to about 2% by weight, more preferably from about 0.1 to about 1% by weight. In each case, percentage by weight refers to the weight of the heat transfer composition.

The diene based compounds are preferably provided in combination with a phosphorous compound.

The phosphorus compound can be a phosphite or a phosphate compound. For the purposes of this invention, the phosphite compound can be a diaryl, dialkyl, triaryl and/or trialkyl phosphite, in particular one or more compounds selected from hindered phosphites, tris-(di-tert-butylphenyl)phosphite, di-n-octyl phophite, iso-decyl diphenyl phosphite, triphenyl phosphite and diphenyl phosphite, particularly diphenyl phosphite.

The phosphate compounds can be a triaryl phosphate, trialkyl phosphate, alkyl mono acid phosphate, aryl diacid phosphate, amine phosphate, preferably triaryl phosphate and/or a trialkyl phosphate, particularly tri-n-butyl phosphate.

Preferably the stabilizer comprises farnesene and diphenyl phosphite.

The phosphorus compounds can be provided in the heat transfer composition in an amount of from about 0.001% by weight to about 10% by weight, more preferably about 0.01 % by weight to about 5% by weight and even more preferably from about 0.1 to about 2.5% by weight, and even more preferably from about 1 to about 2.5% by weight. In each case, by weight refers to weight of the heat transfer composition.
In addition, the phosphorus compounds can be provided in the heat transfer composition in an amount of from about 0.001% by weight to about 5% by weight, preferably about 0.01% by weight to about 2% by weight, more preferably from about 0.1 to about 1% by weight. In each case, by weight refers to weight of the heat transfer composition.

Additionally, the heat transfer composition of the invention comprises a refrigerant consisting of a blend of the following three compounds, with the following percentages being based on the total weight of the following three compounds: from about 48% by weight to about 51% by weight difluoromethane (HFC-32), from about 9.5% by weight to about 11.5% by weight pentafluoroethane (HFC-125), and from about 36.5% by weight to about 40.5% by weight trifluoroiodomethane (CF₃I) and a stabilizer composition comprising a terpene and a phosphorus compound. The phosphorus compound is preferably selected from a phosphate or a phosphite. Preferably, the stabilizer in such composition comprises a terpene and a phosphite, more preferably farnesene and diphenyl phosphite.

Additionally, the heat transfer composition of the invention can comprise a refrigerant consisting of a blend of the following three compounds, with the following percentages being based on the total weight of the following three compounds: about 50% by weight difluoromethane (HFC-32), about 11.5% by weight pentafluoroethane (HFC-125), and about 38.5% by weight trifluoroiodomethane (CF₃I) and a stabilizer composition comprising a terpene and a phosphorus compound selected from a phosphate or a phosphite. The phosphorus compound is preferably selected from a phosphate or a phosphite. Preferably, the stabilizer in such composition comprises a terpene and a phosphite, more preferably farnesene and diphenyl phosphite.

Preferably, the heat transfer composition comprises a refrigerant as set out above and a stabilizer composition comprising farnesene and a phosphorous compound selected from a diaryl phosphite, a dialkyl phosphite, a triaryl phosphate or a trialkyl phosphate, more preferably diphenyl phosphite and/or tri-n-butyl phosphate. More preferably the heat transfer composition comprises a refrigerant as described herein and a stabilizer composition comprising farnesene and one or more of a diaryl phosphite or a dialkyl phosphite, more preferably diphenyl phosphite.

Alternatively, or in addition, the stabilizer is a nitrogen compound. For the purposes of this invention, the nitrogen compound can be one or more compounds selected from dinitrobenzene, nitrobenzene, nitromethane, nitrosobenzene, and TEMPO [(2,2,6,6-tetramethylpiperidin-1-yl)oxyl]. Preferably, the stabilizer is dinitrobenzene.

Alternatively, or in addition, the nitrogen compound comprises an amine based compound. For the purposes of this invention, the amine based compound can be one or more secondary or tertiary amines selected from diphenylamine, p-phenylenediamine, triethylamine, tributylamine, diisopropylamine, triisopropylamine and triisobutylamine. For the purposes of this invention, the amine based compound can be an amine antioxidant such as a substituted piperidine compound, i.e. a derivative of an alkyl substituted piperidyl, piperidinyl, piperazinone, or alkyoxypiperidinyl, particularly one or more amine antioxidants selected from 2,2,6,6-tetramethyl-4-piperidone, 2,2,6,6-tetramethyl-4-piperidinol; bis-(1,2,2,6,6-pentamethylpiperidyl)sebacate; di(2,2,6,6-tetramethyl-4-piperidyl)sebacate, poly(N-hydroxyethyl-2,2,6,6-tetramethyl-4-hydroxy-piperidyl succinate; alkylated paraphenylenediamines such as N-phenyl-N'-(1,3-dimethyl-butyl)-p-phenylenediamine or N,N'-di-sec-butyl-p-phenylenediamine and hydroxylamines such as tallow amines, methyl bis tallow amine and bis tallow amine, or phenol-alpha-napththylamine or Tinuvin ® 765 (Ciba), BLS ® 1944 (Mayzo Inc) and BLS ® 1770 (Mayzo Inc). For the purposes of this invention, the amine based compound can be an alkyldiphenyl amine such as bis (nonylphenyl amine) or a dialkylamine such as (N-(1-methylethyl)-2-propylamine. Alternatively, or in addition, the amine based compound can be one or more of phenyl-alpha-naphthyl amine (PANA), alkyl-phenyl-alpha-naphthyl-amine (APANA) and bis (nonylphenyl) amine. Preferably the amine based compound is one or more of phenyl-alpha-naphthyl amine (PANA), alkyl-phenyl-alpha-naphthyl-amine (APANA) and bis (nonylphenyl) amine, more preferably phenyl-alpha-naphthyl amine (PANA).

The nitrogen compounds can be provided in the heat transfer composition in an amount of from about 0.001% by weight to about 10% by weight, preferably about 0.01% by weight to about 5% by weight, more preferably from about 0.1 to about 2.5% by weight, and even more preferably from about 1 to about 2.5% by weight. In each case, percentage by weight refers to the weight of the heat transfer composition.

In addition, the nitrogen compounds can be provided in the heat transfer composition in an amount of from about 0.001% by weight to about 5% by weight, preferably about 0.01% by weight to about 2% by weight, more preferably from about 0.1 to about 1% by weight. In each case, percentage by weight refers to the weight of the heat transfer composition.

The heat transfer composition of the invention can comprise a refrigerant consisting of a blend of the following three compounds, with the following percentages being based on the total weight of the following three compounds: from about 48% by weight to about 51% by weight difluoromethane (HFC-32), from about 9.5% by weight to about 11.5% by weight pentafluoroethane (HFC-125), and from about 36.5% by weight to about 40.5% by weight trifluoroiodomethane (CF₃I) and a stabilizer composition comprising a nitrogen compound selected from dinitrobenzene, nitrobenzene, nitromethane, nitrosobenzene, and TEMPO [(2,2,6,6-tetramethylpiperidin-1-yl)oxyl]; a secondary or tertiary amine selected from diphenylamine, p-phenylenediamine, triethylamine, tributylamine, diisopropylamine, triisopropylamine and triisobutylamine; an amine antioxidant such as a substituted piperidine compound, i.e. a derivative of an alkyl substituted piperidyl, piperidinyl, piperazinone, or alkyoxypiperidinyl, selected from 2,2,6,6-tetramethyl-4-piperidone, 2,2,6,6-tetramethyl-4-piperidinol; bis-(1,2,2,6,6-pentamethylpiperidyl)sebacate; di(2,2,6,6-tetramethyl-4-piperidyl)sebacate, poly(N-hydroxyethyl-2,2,6,6-tetramethyl-4-hydroxy-piperidyl succinate; alkylated paraphenylenediamines such as N-phenyl-N'-(1,3-dimethyl-butyl)-p-phenylenediamine or N,N'-di-sec-butyl-p-phenylenediamine and hydroxylamines such as tallow amines, methyl bis tallow amine and bis tallow amine, or phenol-alpha-napththylamine or Tinuvin ® 765 (Ciba), BLS ® 1944 (Mayzo Inc) and BLS ® 1770 (Mayzo Inc); an alkyldiphenyl amine such as bis (nonylphenyl amine) a dialkylamine such as (N-(1-methylethyl)-2-propylamine or phenyl-alpha-naphthyl amine (PANA), alkyl-phenyl-alpha-naphthyl-amine (APANA) and bis (nonylphenyl) amine, preferably phenyl-alpha-naphthyl amine (PANA), alkyl-phenyl-alpha-naphthyl-amine (APANA) and bis (nonylphenyl) amine, more preferably phenyl-alpha-naphthyl amine (PANA).

The heat transfer composition of the invention can comprise a refrigerant consisting of a blend of the following three compounds, with the following percentages being based on the total weight of the following three compounds: about 50% by weight difluoromethane (HFC-32), about 11.5% by weight pentafluoroethane (HFC-125), and about 38.5% by weight trifluoroiodomethane (CF₃I) and a stabilizer composition comprising a nitrogen compound selected from dinitrobenzene, nitrobenzene, nitromethane, nitrosobenzene, and TEMPO [(2,2,6,6-tetramethylpiperidin-1-yl)oxyl] a secondary or tertiary amine selected from diphenylamine, p-phenylenediamine, triethylamine, tributylamine, diisopropylamine, triisopropylamine and triisobutylamine; an amine antioxidant such as a substituted piperidine compound, i.e. a derivative of an alkyl substituted piperidyl, piperidinyl, piperazinone, or alkyoxypiperidinyl, selected from 2,2,6,6-tetramethyl-4-piperidone, 2,2,6,6-tetramethyl-4-piperidinol; bis-(1,2,2,6,6-pentamethylpiperidyl)sebacate; di(2,2,6,6-tetramethyl-4-piperidyl)sebacate, poly(N-hydroxyethyl-2,2,6,6-tetramethyl-4-hydroxy-piperidyl succinate; alkylated paraphenylenediamines such as N-phenyl-N'-(1,3-dimethyl-butyl)-p-phenylenediamine or N,N'-di-sec-butyl-p-phenylenediamine and hydroxylamines such as tallow amines, methyl bis tallow amine and bis tallow amine, or phenol-alpha-napththylamine or Tinuvin ® 765 (Ciba), BLS ® 1944 (Mayzo Inc) and BLS ® 1770 (Mayzo Inc); an alkyldiphenyl amine such as bis (nonylphenyl amine) a dialkylamine such as (N-(1-methylethyl)-2-propylamine or phenyl-alpha-naphthyl amine (PANA), alkyl-phenyl-alpha-naphthyl-amine (APANA) and bis (nonylphenyl) amine, preferably phenyl-alpha-naphthyl amine (PANA), alkyl-phenyl-alpha-naphthyl-amine (APANA) and bis (nonylphenyl) amine, more preferably phenyl-alpha-naphthyl amine (PANA) or preferably, the nitrogen compound is dinitrobenzene.

Alternatively, or in addition, the stabilizer comprises a phenol, preferably a hindered phenol. For the purposes of this invention, the phenol can be one or more compounds selected from 4,4'-methylenebis(2,6-di-tert-butylphenol); 4,4'-bis(2,6-di-tert-butylphenol); 2,2- or 4,4-biphenyldiols, including 4,4'-bis(2-methyl-6-tert-butylphenol); derivatives of 2,2- or 4,4-biphenyldiols; 2,2'-methylenebis(4-ethyl-6-tertbutylphenol); 2,2'-methylenebis(4-methyl-6-tert-butylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-tert-butyl-4-methylphenol (BHT); 2,6-di-tert-butyl-4-ethylphenol: 2,4-dimethyl-6-tert-butylphenol; 2,6-di-tert-alpha-dimethylamino-p-cresol; 2,6-di-tert-butyl-4(N,N'-dimethylaminomethylphenol); 4,4'-thiobis(2-methyl-6-tert-butylphenol); 4,4'-thiobis(3-methyl-6-tert-butylphenol); 2,2'-thiobis(4-methyl-6-tert-butylphenol); bis(3-methyl-4-hydroxy-5-tert-butylbenzyl) sulfide; bis (3,5-di-tert-butyl-4-hydroxybenzyl)sulfide, tocopherol, hydroquinone, 2,2'6,6'-tetra-tert-butyl-4,4'-methylenediphenol and t-butyl hydroquinone, preferably BHT

The phenol compounds can be provided in the heat transfer composition in an amount of from about 0.001% by weight to about 5 % by weight, preferably about 0.01% by weight to about 2% by weight, more preferably from about 0.1 to about 1% by weight. In each case, by percentage weight refers to the weight of the heat transfer composition.

Alternatively, the phenol compounds can be provided in the heat transfer composition in an amount of from about 0.001% by weight to about 5 % by weight, preferably about 0.005% by weight to about 2% by weight, more preferably from about 0.01 to about 1% by weight. In each case, percentage by weight refers to the weight of the heat transfer composition.

Additionally, the heat transfer composition of the invention comprises a refrigerant consisting of a blend of the following three compounds, with the following percentages being based on the total weight of the following three compounds: from about 48% by weight to about 51% by weight difluoromethane (HFC-32), from about 9.5% by weight to about 11.5% by weight pentafluoroethane (HFC-125), and from about 36.5% by weight to about 40.5% by weight trifluoroiodomethane (CF₃I) and a stabilizer composition comprising a phenol compound selected from 4,4'-methylenebis(2,6-di-tert-butylphenol); 4,4'-bis(2,6-di-tertbutylphenol); 2,2- or 4,4-biphenyldiols, including 4,4'-bis(2-methyl-6-tert-butylphenol); derivatives of 2,2- or 4,4-biphenyldiols; 2,2'-methylenebis(4-ethyl-6-tertbutylphenol); 2,2'-methylenebis(4-methyl-6-tert-butylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-tert-butyl-4-methylphenol (BHT); 2,6-di-tert-butyl-4-ethylphenol: 2,4-dimethyl-6-tertbutylphenol; 2,6-di-tert-alpha-dimethylamino-p-cresol; 2,6-di-tert-butyl-4(N,N'-dimethylaminomethylphenol); 4,4'-thiobis(2-methyl-6-tert-butylphenol); 4,4'-thiobis(3-methyl-6-tert-butylphenol); 2,2'-thiobis(4-methyl-6-tert-butylphenol); bis(3-methyl-4-hydroxy-5-tert-butylbenzyl) sulfide; bis (3,5-di-tert-butyl-4-hydroxybenzyl)sulfide, tocopherol, hydroquinone, 2,2'6,6'-tetra-tert-butyl-4,4'-methylenediphenol and t-butyl hydroquinone, preferably BHT

The heat transfer composition of the invention comprises a refrigerant consisting of a blend of the following three compounds, with the following percentages being based on the total weight of the following three compounds: about 50% by weight difluoromethane (HFC-32), about 11.5% by weight pentafluoroethane (HFC-125), and about 38.5% by weight trifluoroiodomethane (CF₃I) and a stabilizer composition comprising a phenol compound selected from 4,4'-methylenebis(2,6-di-tert-butylphenol); 4,4'-bis(2,6-di-tert-butylphenol); 2,2- or 4,4-biphenyldiols, including 4,4'-bis(2-methyl-6-tert-butylphenol); derivatives of 2,2- or 4,4-biphenyldiols; 2,2'-methylenebis(4-ethyl-6-tertbutylphenol); 2,2'-methylenebis(4-methyl-6-tert-butylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-tert-butyl-4-methylphenol (BHT); 2,6-di-tert-butyl-4-ethylphenol: 2,4-dimethyl-6-tertbutylphenol; 2,6-di-tert-alpha-dimethylamino-p-cresol; 2,6-di-tert-butyl-4(N,N'-dimethylaminomethylphenol); 4,4'-thiobis(2-methyl-6-tert-butylphenol); 4,4'-thiobis(3-methyl-6-tert-butylphenol); 2,2'-thiobis(4-methyl-6-tert-butylphenol); bis(3-methyl-4-hydroxy-5-tert-butylbenzyl) sulfide; bis (3,5-di-tert-butyl-4-hydroxybenzyl)sulfide, tocopherol, hydroquinone, 2,2'6,6'-tetra-tert-butyl-4,4'-methylenediphenol and t-butyl hydroquinone, preferably BHT

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition comprising BHT, wherein said BHT is present in an amount of from about 0.001% by weight to about 5 % by weight based on the weight of heat transfer composition.

The heat transfer composition of the invention can preferably comprise a refrigerant consisting of a blend of the following three compounds, with the following percentages being based on the total weight of the following three compounds: about 50% by weight difluoromethane (HFC-32), about 11.5% by weight pentafluoroethane (HFC-125), and about 38.5% by weight trifluoroiodomethane (CF₃I) and a stabilizer composition comprising BHT, wherein said BHT is present in an amount of from about 0.001% by weight to about 5 % by weight based on the weight of heat transfer composition.

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition consisting essentially of BHT, wherein said BHT is present in an amount of from about 0.001% by weight to about 5 % by weight based on the weight of heat transfer composition.

The heat transfer composition of the invention can preferably comprise a refrigerant consisting of a blend of the following three compounds, with the following percentages being based on the total weight of the following three compounds: about 50% by weight difluoromethane (HFC-32), about 11.5% by weight pentafluoroethane (HFC-125), and about 38.5% by weight trifluoroiodomethane (CF₃I) and a stabilizer composition consisting essentially of BHT, wherein said BHT is present in an amount of from about 0.001% by weight to about 5 % by weight based on the weight of heat transfer composition.

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition comprising farnesene, diphenyl phosphite and BHT, wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition.

The heat transfer composition of the invention can preferably comprise a refrigerant consisting of about 50% by weight difluoromethane (HFC-32), about 11.5% by weight pentafluoroethane (HFC-125), and about 38.5% by weight trifluoroiodomethane (CF₃I) and a stabilizer composition comprising farnesene, diphenyl phosphite and BHT wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition.

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition consisting essentially of farnesene, diphenyl phosphite and BHT, wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition.

The heat transfer composition of the invention can preferably comprise a refrigerant consisting of about 50% by weight difluoromethane (HFC-32), about 11.5% by weight pentafluoroethane (HFC-125), and about 38.5% by weight trifluoroiodomethane (CF₃I) and a stabilizer composition consisting essentially of farnesene, diphenyl phosphite and BHT wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition.

Each of the heat transfer compositions of the invention as defined above may additionally comprise a lubricant. In general, the heat transfer composition comprises a lubricant, in amounts of from about 5 to 60% by weight of the heat transfer composition, preferably about 10 to about 60% by weight of the heat transfer composition, preferably from about 20 to about 50 % by weight of the heat transfer composition, alternatively about 20 to about 40% by weight of the heat transfer composition, alternatively about 20 to about 30 % by weight of the heat transfer composition, alternatively about 30 to about 50% by weight of the heat transfer composition, alternatively about 30 to about 40% by weight of the heat transfer composition. The heat transfer composition may comprise a lubricant, in amounts of from about 5 to about 10% by weight of the heat transfer composition, preferably around about 8 % by weight of the heat transfer composition.

Commonly used refrigerant lubricants such as polyol esters (POEs), polyalkylene glycols (PAGs), silicone oils, mineral oil, alkylbenzenes (ABs), polyvinyl ethers (PVEs) and poly(alpha-olefin) (PAO) that are used in refrigeration machinery may be used with the refrigerant compositions of the present invention.

Preferably the lubricants are selected from polyol esters (POEs), polyalkylene glycols (PAGs), mineral oil, alkylbenzenes (ABs) and polyvinyl ethers (PVE), more preferably from polyol esters (POEs), mineral oil, alkylbenzenes (ABs) and polyvinyl ethers (PVE), particularly from polyol esters (POEs), mineral oil and alkylbenzenes (ABs), most preferably from polyol esters (POEs).

Commercially available mineral oils include Witco LP 250 (registered trademark) from Witco, Suniso 3GS from Witco and Calumet R015 from Calumet. Commercially available alkylbenzene lubricants include Zerol 150 (registered trademark) and Zerol 300 (registered trademark) from Shrieve Chemical. Commercially available esters include neopentyl glycol dipelargonate which is available as Emery 2917 (registered trademark) and Hatcol 2370 (registered trademark). Other useful esters include phosphate esters, di-basic acid esters and fluoro esters.

For the purposes of this invention, the heat transfer composition can comprise a refrigerant and a stabilizer composition as disclosed above and a lubricant selected from polyol esters (POEs), polyalkylene glycols (PAGs), mineral oil, alkylbenzenes (ABs) and polyvinyl ethers (PVE), more preferably from polyol esters (POEs), mineral oil, alkylbenzenes (ABs) and polyvinyl ethers (PVE), particularly from polyol esters (POEs), mineral oil and alkylbenzenes (ABs), most preferably from polyol esters (POEs).

A preferred heat transfer composition further comprises a refrigerant consisting of a blend of the following three compounds, with the following percentages being based on the total weight of the following three compounds: from about 48% by weight to about 51% by weight difluoromethane (HFC-32), from about 9.5% by weight to about 11.5% by weight pentafluoroethane (HFC-125), and from about 36.5% by weight to about 40.5% by weight trifluoroiodomethane (CF₃I) and from 10 to 60 wt.% of a polyol ester (POE) lubricant, based on the weight of the heat transfer composition.

A preferred heat transfer composition further comprises a refrigerant consisting of a blend of the following three compounds, with the following percentages being based on the total weight of the following three compounds from about 50% by weight difluoromethane (HFC-32), about 11.5% by weight pentafluoroethane (HFC-125), and about 38.5% by weight trifluoroiodomethane (CF₃I) and from 10 to 60 wt.% of a polyol ester (POE) lubricant, based on the weight of the heat transfer composition.

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition comprising BHT, wherein said BHT is present in an amount of from about 0.001% by weight to about 5 % by weight based on the weight of heat transfer composition and from 10 to 60 wt.% of a polyol ester (POE) lubricant, based on the weight of the heat transfer composition.

The heat transfer composition of the invention can preferably comprise a refrigerant consisting of about 50% by weight difluoromethane (HFC-32), about 11.5% by weight pentafluoroethane (HFC-125), and about 38.5% by weight trifluoroiodomethane (CF₃I) and a stabilizer composition comprising BHT, wherein said BHT is present in an amount of from about 0.001% by weight to about 5 % by weight based on the weight of heat transfer composition and from 10 to 60 wt.% of a polyol ester (POE) lubricant, based on the weight of the heat transfer composition.

The heat transfer composition of the invention can preferably comprise a refrigerant consisting of a blend of the following three compounds, with the following percentages being based on the total weight of the following three compounds: from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I) and a stabilizer composition comprising farnesene, diphenyl phosphite and BHT, wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant, based on the weight of the heat transfer composition

The heat transfer composition of the invention can preferably comprise a refrigerant consisting of about 50% by weight difluoromethane (HFC-32), about 11.5% by weight pentafluoroethane (HFC-125), and about 38.5% by weight trifluoroiodomethane (CF₃I) and a stabilizer composition comprising farnesene, diphenyl phosphite and BHT wherein the farnesene is provided in an amount of from about 0.001% by weight to about 5% by weight based on the weight of the heat transfer composition, the diphenyl phosphite is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant, based on the weight of the heat transfer composition.

Where the compositions of the invention are provided for use in mobile air conditioning, the lubricant is a polyol ester (POE) lubricant or a polyalkylene glycol lubricant, preferably a polyol ester (POE) lubricant. Alternatively, when the compositions of the invention are provided for stationary air conditioning applications, the lubricant is preferably a polyol ester (POE), an alkyl benzene or a mineral oil, more preferably a polyol ester (POE) lubricant. The heat transfer composition of the invention may consist essentially of or consist of a refrigerant, a stabilizer composition and a lubricant as described herein.

It has surprisingly been discovered that the refrigerant compositions of the invention are miscible with POE lubricants across a desirable and wide range of temperatures, e.g. temperatures of from about -40°C to +80°C. This allows the inventive refrigerant and heat transfer compositions to be used in a wider variety of heat transfer applications than R410A. For example, the inventive refrigerant and heat transfer compositions may be used in refrigeration, air conditioning and heat pump applications.

The present invention can further comprise a heat transfer composition as set out below wherein the lubricant is present in an amount of 20 wt% relative to the total amount of refrigerant and lubricant and wherein the mixture has one liquid phase across the temperature range of -40 °C to +80 °C.

The present invention can further comprise a heat transfer composition as set out below wherein the lubricant is present in an amount of 50 wt% relative to the total amount of refrigerant and lubricant and wherein the mixture has one liquid phase across the temperature range of -40 °C to +80 °C.

In a particularly preferred feature of the present invention, the heat transfer composition comprises a refrigerant as set out above, and a POE lubricant, wherein the lubricant is present in an amount of 5 wt% relative to the total amount of refrigerant and lubricant and wherein the mixture has one liquid phase at at least one temperature in the range of -40 to - 25 °C and/or in the range of +50 to +80 °C.

In a particularly preferred feature of the present invention, the heat transfer composition comprises a refrigerant as set out above, and a POE lubricant, wherein the lubricant is present in an amount of 20 wt% relative to the total amount of refrigerant and lubricant and wherein the mixture has one liquid phase at at least one temperature in the range of -40 to - 25 °C and/or in the range of +50 to +80 °C.

In a particularly preferred feature of the present invention, the heat transfer composition comprises a refrigerant as set out above, and a POE lubricant, wherein the lubricant is present in an amount of 50 wt% relative to the total amount of refrigerant and lubricant and wherein the mixture has one liquid phase at at least one temperature in the range of -40 to - 25 °C and/or in the range of +50 to +80 °C.

In an alternative particularly preferred feature of the present invention, the heat transfer composition comprises a refrigerant as set out above, and a POE lubricant, wherein the lubricant is present in an amount of 5 wt% relative to the total amount of refrigerant and lubricant and wherein the mixture has one liquid phase across the temperature range of -40 to - 25 °C and/or +50 to +80 °C.

In an alternative particularly preferred feature of the present invention, the heat transfer composition comprises a refrigerant as set out above, and a POE lubricant, wherein the lubricant is present in an amount of 20 wt% relative to the total amount of refrigerant and lubricant and wherein the mixture has one liquid phase across the temperature range of -40 to - 25 °C and/or +50 to +80 °C.

In an alternative particularly preferred feature of the present invention, the heat transfer composition comprises a refrigerant as set out above, and a POE lubricant, wherein the lubricant is present in an amount of 50 wt% relative to the total amount of refrigerant and lubricant and wherein the mixture has one liquid phase across the temperature range of -40 to - 25 °C and/or +50 to +80 °C.

The present invention further provides a heat transfer composition comprising a consisting of a blend of the following three compounds, with the following percentages being based on the total weight of the following three compounds:
from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I)
and a POE lubricant; wherein the lubricant is present in an amount of 5 wt% relative to the total amount of refrigerant and lubricant and wherein the mixture has one liquid phase at at least one temperature in the range of -40 °C to +80 °C.

The present invention can further comprise a heat transfer composition as set out below wherein the lubricant is present in an amount of 20 wt% relative to the total amount of refrigerant and lubricant and wherein the mixture has one liquid phase at at least one temperature in the range of -40 °C to +80 °C.

The present invention can further comprise a heat transfer composition as set out below wherein the lubricant is present in an amount of 50 wt% relative to the total amount of refrigerant and lubricant and wherein the mixture has one liquid phase at at least one temperature in the range of -40 °C to +80 °C.

In a particularly preferred feature of the present invention, the heat transfer composition comprises a refrigerant consisting of a blend of the following three compounds, with the following percentages being based on the total weight of the following three compounds:
from about 48% by weight to about 51% by weight difluoromethane (HFC-32),
from about 9.5% by weight to about 11.5% by weight pentafluoroethane (HFC-125), and
from about 36.5% by weight to about 40.5% by weight trifluoroiodomethane (CF₃I)
and a POE lubricant; wherein the lubricant is present in an amount of 5 wt% relative to the total amount of refrigerant and lubricant and wherein the mixture has one liquid phase across the temperature range of -40 °C to +80 °C.

The present invention can further comprise a heat transfer composition as set out herein wherein the lubricant is present in an amount of 20 wt% relative to the total amount of refrigerant and lubricant and wherein the mixture has one liquid phase across the temperature range of -40 °C to +80 °C.

The present invention can further comprise a heat transfer composition as set out herein wherein the lubricant is present in an amount of 50 wt% relative to the total amount of refrigerant and lubricant and wherein the mixture has one liquid phase across the temperature range of -40 °C to +80 °C.

In a particularly preferred feature of the present invention, the heat transfer composition comprises a refrigerant as set out herein, and a POE lubricant, wherein the lubricant is present in an amount of 5 wt% relative to the total amount of refrigerant and lubricant and wherein the mixture has one liquid phase at at least one temperature in the range of -40 to - 25 °C and/or in the range of +50 to +80 °C.

In a particularly preferred feature of the present invention, the heat transfer composition comprises a refrigerant as set out herein, and a POE lubricant, wherein the lubricant is present in an amount of 20 wt% relative to the total amount of refrigerant and lubricant and wherein the mixture has one liquid phase at at least one temperature in the range of -40 to - 25 °C and/or in the range of +50 to +80 °C.

In a particularly preferred feature of the present invention, the heat transfer composition comprises a refrigerant as set out herein, and a POE lubricant, wherein the lubricant is present in an amount of 50 wt% relative to the total amount of refrigerant and lubricant and wherein the mixture has one liquid phase at at least one temperature in the range of -40 to - 25 °C and/or in the range of +50 to +80 °C.

In an alternative particularly preferred feature of the present invention, the heat transfer composition comprises a refrigerant as set out herein, and a POE lubricant, wherein the lubricant is present in an amount of 5 wt% relative to the total amount of refrigerant and lubricant and wherein the mixture has one liquid phase across the temperature range of -40 to - 25 °C and/or +50 to +80 °C.

In an alternative particularly preferred feature of the present invention, the heat transfer composition comprises a refrigerant as set out herein, and a POE lubricant, wherein the lubricant is present in an amount of 20 wt% relative to the total amount of refrigerant and lubricant and wherein the mixture has one liquid phase across the temperature range of -40 to - 25 °C and/or +50 to +80 °C.

In an alternative particularly preferred feature of the present invention, the heat transfer composition comprises a refrigerant as set out herein, and a POE lubricant, wherein the lubricant is present in an amount of 50 wt% relative to the total amount of refrigerant and lubricant and wherein the mixture has one liquid phase across the temperature range of -40 to - 25 °C and/or +50 to +80 °C.

The present invention further provides a heat transfer composition comprising a refrigerant consisting of a blend of the following three compounds, with the following percentages being based on the total weight of the following three compounds:
about 50% by weight difluoromethane (HFC-32),
about 11.5% by weight pentafluoroethane (HFC-125), and
about 38.5% by weight trifluoroiodomethane (CF₃I)
and a POE lubricant; wherein the lubricant is present in an amount of 5 wt% relative to the total amount of refrigerant and lubricant and wherein the mixture has one liquid phase at at least one temperature in the range of -40 °C to +80 °C.

The present invention can further comprise a heat transfer composition as set out herein wherein the lubricant is present in an amount of 20 wt% relative to the total amount of refrigerant and lubricant and wherein the mixture has one liquid phase at at least one temperature in the range of -40 °C to +80 °C.

The present invention can further comprise a heat transfer composition as set out herein wherein the lubricant is present in an amount of 50 wt% relative to the total amount of refrigerant and lubricant and wherein the mixture has one liquid phase at at least one temperature in the range of -40 °C to +80 °C.

In a particularly preferred feature of the present invention, the heat transfer composition comprises a refrigerant consisting of a blend of the following three compounds, with the following percentages being based on the total weight of the following three compounds:
about 50% by weight difluoromethane (HFC-32),
about 11.5% by weight pentafluoroethane (HFC-125), and
about 38.5% by weight trifluoroiodomethane (CF₃I)
and a POE lubricant; wherein the lubricant is present in an amount of 5 wt% relative to the total amount of refrigerant and lubricant and wherein the mixture has one liquid phase across the temperature range of -40 °C to +80 °C.

Other additives not mentioned herein can also be included by those skilled in the art in view of the teaching contained herein without departing from the novel and basic features of the present invention.

Combinations of surfactants and solubilizing agents may also be added to the present compositions to aid oil solubility as disclosed in US patent No. 6,516,837.

The applicants have found that the compositions of the invention are capable of achieving a difficult to achieve combination of properties including particularly low GWP. Thus, the compositions of the invention have a Global Warming Potential (GWP) of not greater than about 1500, preferably not greater than about 1000, more preferably not greater than about 750. In a particularly preferred feature of the invention, the composition of the invention has a Global Warming Potential (GWP) of not greater than about 750.

In addition, the compositions of the invention have a low Ozone Depletion Potential (ODP). Thus, the compositions of the invention have an Ozone Depletion Potential (ODP) of not greater than 0.05, preferably not greater than 0.02, more preferably about zero.

In addition, the compositions of the invention show acceptable toxicity and preferably have an Occupational Exposure Limit (OEL) of greater than about 400.

The compositions disclosed herein are provided for use in heat transfer applications, including air conditioning, refrigeration and heat pumps.

Any reference to the heat transfer composition of the invention refers to each and any of the heat transfer compositions as described herein. Thus, for the following discussion of the uses or applications of the composition of the invention, the heat transfer composition may comprise or consist essentially of any of the refrigerants described herein

For the purposes of this invention, each and any of the heat transfer compositions as described herein can be used in a heat transfer system, such as an air conditioning system, a refrigeration system or a heat pump. The heat transfer system according to the present invention can comprise a compressor, an evaporator, a condenser and an expansion device, in communication with each other.

Examples of commonly used compressors, for the purposes of this invention include reciprocating, rotary (including rolling piston and rotary vane), scroll, screw, and centrifugal compressors. Thus, the present invention provides each and any of the refrigerants and/or heat transfer compositions as described herein for use in a heat transfer system comprising a reciprocating, rotary (including rolling piston and rotary vane), scroll, screw, or centrifugal compressor.

Examples of commonly used expansion devices, for the purposes of this invention include a capillary tube, a fixed orifice, a thermal expansion valve and an electronic expansion valve. Thus, the present invention provides each and any of the refrigerants and/or heat transfer compositions as described herein for use in a heat transfer system comprising a capillary tube, a fixed orifice, a thermal expansion valve or an electronic expansion valve.

For the purposes of this invention, the evaporator and the condenser together form a heat exchanger, preferably selected from a finned tube heat exchanger, a microchannel heat exchanger, a shell and tube, a plate heat exchanger, and a tube-in-tube heat exchanger. Thus, the present invention provides each and any of the refrigerants and/or heat transfer compositions as described herein for use in a heat transfer system wherein the evaporator and condenser together form a finned tube heat exchanger, a microchannel heat exchanger, a shell and tube, a plate heat exchanger, or a tube-in-tube heat exchanger.

The heat transfer composition of the invention can be used in heating and cooling applications.

In a particular feature of the invention, the heat transfer composition can be used in a method of cooling comprising condensing a heat transfer composition and subsequently evaporating said composition in the vicinity of an article or body to be cooled.

Thus, the invention relates to a method of cooling in a heat transfer system comprising an evaporator, a condenser and a compressor, the process comprising the steps of i) condensing a heat transfer composition as described herein; and
ii) evaporating the composition in the vicinity of body or article to be cooled;
wherein the evaporator temperature of the heat transfer system is in the range of from about -40°C to about +10°C;

Alternatively, or in addition, the heat transfer composition can be used in a method of heating comprising condensing the heat transfer composition in the vicinity of an article or body to be heated and subsequently evaporating said composition.

Thus, the invention relates to a method of heating in a heat transfer system comprising an evaporator, a condenser and a compressor, the process comprising the steps of i) condensing a heat transfer composition as described herein,
in the vicinity of a body or article to be heated
and
ii) evaporating the composition;
wherein the evaporator temperature of the heat transfer system is in the range of about - 30°C to about 5°C

The heat transfer composition of the invention is provided for use in air conditioning applications including both mobile and stationary air conditioning applications. Thus, any of the heat transfer compositions described herein can be used in any one of:
- an air conditioning application including mobile air conditioning, particularly automobile air conditioning,
- a mobile heat pump, particularly an electric vehicle heat pump;
- a chiller, particularly a positive displacement chiller, more particularly an air cooled or water cooled direct expansion chiller, which is either modular or conventionally singularly packaged,
- a residential air conditioning system, particularly a ducted split or a ductless split air conditioning system,
- a residential heat pump,
- a residential air to water heat pump/hydronic system,
- an industrial air conditioning system
- a commercial air conditioning system, particularly a packaged rooftop unit and a variable refrigerant flow (VRF) system;
- a commercial air source, water source or ground source heat pump system.

The heat transfer composition of the invention is provided for use in a refrigeration system. The term "refrigeration system" refers to any system or apparatus or any part or portion of such a system or apparatus which employs a refrigerant to provide cooling. Thus, any of the heat transfer compositions described herein can be used in any one of:
- a low temperature refrigeration system,
- a medium temperature refrigeration system,
- a commercial refrigerator,
- a commercial freezer,
- an ice machine,
- a vending machine,
- a transport refrigeration system,
- a domestic freezer,
- a domestic refrigerator,
- an industrial freezer,
- an industrial refrigerator and
- a chiller.

Each of the heat transfer compositions described herein is particularly provided for use in a residential air-conditioning system (with an evaporator temperature in the range of about 0 to about 10°C, particularly about 7°C for cooling and/or in the range of about -20 to about 3°C, particularly about 0.5°C for heating). Alternatively, or additionally, each of the heat transfer compositions described herein is particularly provided for use in a residential air conditioning system with a reciprocating, rotary (rolling-piston or rotary vane) or scroll compressor.

Each of the heat transfer compositions described herein is particularly provided for use in an air cooled chiller (with an evaporator temperature in the range of about 0 to about 10°C, particularly about 4.5°C), particularly an air cooled chiller with a positive displacement compressor, more particular an air cooled chiller with a reciprocating scroll compressor.

Each of the heat transfer compositions described herein is particularly provided for use in a residential air to water heat pump hydronic system (with an evaporator temperature in the range of about -20 to about 3°C, particularly about 0.5°C or with an evaporator temperature in the range of about -30 to about 5°C, particularly about 0.5°C).

Each of the heat transfer compositions described herein is particularly provided for use in a medium temperature refrigeration system (with an evaporator temperature in the range of about -12 to about 0°C, particularly about -8°C).

Each of the heat transfer compositions described herein is particularly provided for use in a low temperature refrigeration system (with an evaporator temperature in the range of about - 40 to about -12°C, particularly about -23°C or preferably about -32°C).

Thus, the heat transfer composition of the invention is provided for use in a residential air conditioning system, wherein the residential air-conditioning system is used to supply cool air (said air having a temperature of for example, about 10°C to about 17°C, particularly about 12°C) to buildings for example, in the summer. Typical system types are split, mini-split, and window, ducted split, ductless split, window, and portable air-conditioning system. The system usually has an air-to-refrigerant evaporator (indoor coil), a compressor, an air-to-refrigerant condenser (outdoor coil), and an expansion valve. The evaporator and condenser are usually a round tube plate fin, a finned tube or microchannel heat exchanger. The compressor is usually a reciprocating or rotary (rolling-piston or rotary vane) or scroll compressor. The expansion valve is usually a capillary tube, thermal or electronic expansion valve. The refrigerant evaporating temperature is preferably in the range of 0 to 10°C. The condensing temperature is preferably in the range of 40 to 70 °C.

The heat transfer composition of the invention is provided for use in a residential heat pump system, wherein the residential heat pump system is used to supply warm air (said air having a temperature of for example, about 18°C to about 24°C, particularly about 21°C) to buildings in the winter. It is usually the same system as the residential air-conditioning system, while in the heat pump mode the refrigerant flow is reversed and the indoor coil becomes condenser and the outdoor coil becomes evaporator. Typical system types are split and mini-split heat pump system. The evaporator and condenser are usually a round tube plate fin, a finned or microchannel heat exchanger. The compressor is usually a reciprocating or rotary (rolling-piston or rotary vane) or scroll compressor. The expansion valve is usually a thermal or electronic expansion valve. The refrigerant evaporating temperature is preferably in the range of about -20 to about 3°C or about -30 to about 5°C. The condensing temperature is preferably in the range of about 35 to about 50 °C.

The heat transfer composition of the invention is provided for use in a commercial air-conditioning system wherein the commercial air conditioning system can be a chiller which is used to supply chilled water (said water having a temperature of for example about 7°C) to large buildings such as offices and hospitals, etc. Depending on the application, the chiller system may be running all year long. The chiller system may be air-cooled or water-cooled. The air-cooled chiller usually has a plate, tube-in-tube or shell-and-tube evaporator to supply chilled water, a reciprocating or scroll compressor, a round tube plate fin, a finned tube or microchannel condenser to exchange heat with ambient air, and a thermal or electronic expansion valve. The water-cooled system usually has a shell-and-tube evaporator to supply chilled water, a reciprocating, scroll, screw or centrifugal compressor, a shell-and-tube condenser to exchange heat with water from cooling tower or lake, sea and other natural recourses, and a thermal or electronic expansion valve. The refrigerant evaporating temperature is preferably in the range of about 0 to about 10°C. The condensing temperature is preferably in the range of about 40 to about 70 °C.

The heat transfer composition of the invention is provided for use in a residential air-to-water heat pump hydronic system, wherein the residential air-to-water heat pump hydronic system is used to supply hot water (said water having a temperature of for example about 50°C or about 55°C) to buildings for floor heating or similar applications in the winter. The hydronic system usually has a round tube plate fin, a finned tube or microchannel evaporator to exchange heat with ambient air, a reciprocating, scroll or rotary compressor, a plate, tube-in-tube or shell-in-tube condenser to heat the water, and a thermal or electronic expansion valve. The refrigerant evaporating temperature is preferably in the range of about -20 to about 3°C, or -30 to about 5°C. The condensing temperature is preferably in the range of about 50 to about 90 °C.

The heat transfer composition of the invention is provided for use in a medium temperature refrigeration system, wherein the medium temperature refrigeration system is preferably used to chill food or beverages such as in a refrigerator or a bottle cooler. The system usually has an air-to-refrigerant evaporator to chill the food or beverage, a reciprocating, scroll or screw or rotary compressor, an air-to-refrigerant condenser to exchange heat with the ambient air, and a thermal or electronic expansion valve. The refrigerant evaporating temperature is preferably in the range of about -12 to about 0°C. The condensing temperature is preferably in the range of about 40 to about 70 °C, or about 20 to about 70 °C.

The heat transfer composition of the invention is provided for use in a low temperature refrigeration system, wherein said low temperature refrigeration system is preferably used in a freezer or an ice cream machine. The system usually has an air-to-refrigerant evaporator to chill the food or beverage, a reciprocating, scroll or rotary compressor, an air-to-refrigerant condenser to exchange heat with the ambient air, and a thermal or electronic expansion valve. The refrigerant evaporating temperature is preferably in the range of about -40 to about -12°C. The condensing temperature is preferably in the range of about 40 to about 70 °C, or about 20 to about 70 °C.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; in a chiller.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and from 10 to 60 wt.% of a polyol ester (POE) lubricant based on the weight of the heat transfer composition, in a chiller.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition in a chiller.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant based on the weight of the heat transfer composition, in a chiller.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; in stationary air conditioning, particularly residential air conditioning, industrial air conditioning or commercial air conditioning.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and from 10 to 60 wt.% of a polyol ester (POE) lubricant based on the weight of the heat transfer composition, in stationary air conditioning, particularly residential air conditioning, industrial air conditioning or commercial air conditioning.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition in stationary air conditioning, particularly residential air conditioning, industrial air conditioning or commercial air conditioning.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant based on the weight of the heat transfer composition, in stationary air conditioning, particularly residential air conditioning, industrial air conditioning or commercial air conditioning.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; in commercial refrigeration, particularly in a commercial refrigerator, commercial freezer, an ice machine or a vending machine.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and from 10 to 60 wt.% of a polyol ester (POE) lubricant based on the weight of the heat transfer composition, in commercial refrigeration, particularly in a commercial refrigerator, commercial freezer, an ice machine or a vending machine.

Also disclosed herein is the use of a heat transfer composition comprising a refrigerant, said refrigerant comprising at least about 97% by weight of a blend of three compounds, said blend consisting of:
about 46% by weight difluoromethane (HFC-32), about 12% by weight pentafluoroethane (HFC-125), and about 42% by weight trifluoroiodomethane (CF₃I) wherein the percentages are based on the total weight of the three compounds in the blend and from 10 to 60 wt.% of a polyol ester (POE) lubricant; based on the weight of the heat transfer composition, in commercial refrigeration, particularly in a commercial refrigerator, commercial freezer, an ice machine or a vending machine.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT
wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition in commercial refrigeration, particularly in a commercial refrigerator, commercial freezer, an ice machine or a vending machine.

The present invention therefore provides the use of a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant based on the weight of the heat transfer composition, in commercial refrigeration, particularly in a commercial refrigerator, commercial freezer, an ice machine or a vending machine.

For the purposes of the uses set out above, the stabilizer composition can comprise farnesene, diphenyl phosphite and BHT. Alternatively, the stabilizer composition can comprise BHT. Preferably, the stabilizer composition consists essentially of farnesene, diphenyl phosphite and BHT. Preferably, the stabilizer composition consists essentially of BHT. Preferably, the stabilizer composition consists of farnesene, diphenyl phosphite and BHT. Preferably, the stabilizer composition consists of BHT.

The heat transfer composition disclosed herein is provided as a low Global Warming (GWP) replacement for the refrigerant R-410A. The heat transfer composition therefore can be used in a method of retrofitting an existing heat transfer system designed to contain or containing R-410A refrigerant, without requiring substantial engineering modification of the existing system, particularly without modification of the condenser, the evaporator and/or the expansion valve.

There is therefore provided a method of retrofitting an existing heat transfer system designed to contain or containing R-410A refrigerant or which is suitable for use with R-410A refrigerant, said method comprising replacing at least a portion of the existing R-410A refrigerant with a heat transfer composition or a refrigerant of the present invention.

Where the existing heat transfer system is suitable for use with R-410A, the method comprises removing any existing refrigerant (which can be but is not limited to R-410A) and introducing a heat transfer composition or a refrigerant of the present invention.

Alternatively, the heat transfer composition or refrigerant can be used in a method of retrofitting an existing heat transfer system designed to contain or containing R410A refrigerant, wherein the system is modified for the refrigerant of the invention.

Alternatively, the heat transfer composition or refrigerant can be used in a heat transfer system which is suitable for use with R-410A refrigerant.

It will be appreciated that when the heat transfer composition is used as a low Global Warming replacement for R-410A or is used in a method of retrofitting an existing heat transfer system designed to contain or containing R-410A refrigerant or is used in a heat transfer system which is suitable for use with R-410A refrigerant, the heat transfer composition may consist essentially of the refrigerant of the invention. Alternatively, the invention encompasses the use of the refrigerant of the invention as a low Global Warming replacement for R-410A or is used in a method of retrofitting an existing heat transfer system designed to contain or containing R-410A refrigerant or is used in a heat transfer system which is suitable for use with R-410A refrigerant as described herein.

It will be appreciated by the skilled person that when the heat transfer composition is provided for use in a method of retrofitting an existing heat transfer system as described above.

As set out above, the method comprises removing at least a portion of the existing R-410A refrigerant from the system. Preferably, the method comprises removing at least about 5%, about 10%, about 25%, about 50% or about 75% by weight of the R-410A from the system and replacing it with the heat transfer compositions of the invention.

The compositions of the invention may be employed in systems which are used or are suitable for use with R-410A refrigerant, such as existing or new heat transfer systems.

The compositions of the present invention exhibit many of the desirable characteristics of R-410A but have a GWP that is substantially lower than that of R-410A while at the same time having operating characteristics i.e. capacity and/or efficiency (COP) that are substantially similar to or substantially match, and preferably are as high as or higher than R-410A. This allows the claimed compositions to replace R-410A in existing heat transfer systems without requiring any significant system modification for example of the condenser, the evaporator and/or the expansion valve. The composition can therefore be used as a direct replacement in retrofitting heat exchange systems which have been used with or are suitable for use with R-410A.

The composition of the invention therefore preferably exhibit operating characteristics compared with R-410A wherein:
- the efficiency (COP) of the composition is from 95 to 105% of the efficiency of R-410A; and/or
- the capacity is from 95 to 105% of the capacity of R-410A.
in heat transfer systems, in which the compositions of the invention are to replace the R-410A refrigerant.

Preferably, the composition of the invention preferably exhibit operating characteristics compared with R-410A wherein:
- the efficiency (COP) of the composition is from 100 to 105% of the efficiency of R-410A; and/or
- the capacity is from 98 to 105% of the capacity of R-410A.
in heat transfer systems, in which the compositions of the invention are to replace the R-410A refrigerant.

The term "COP" is a measure of energy efficiency and means the ratio of refrigeration or cooling capacity to the energy requirement of the refrigeration system, i.e. the energy to run the compressor, fans, etc. COP is the useful output of the refrigeration system, in this case the refrigeration capacity or how much cooling is provided, divided by how power it takes to get this output. Essentially, it is a measure of the efficiency of the system.

The term "capacity" is the amount of cooling provided, in BTUs/hr, by the refrigerant in the refrigeration system. This is experimentally determined by multiplying the change in enthalpy in BTU/lb, of the refrigerant as it passes through the evaporator by the mass flow rate of the refrigerant. The enthalpy can be determined from the measurement of the pressure and temperature of the refrigerant. The capacity of the refrigeration system relates to the ability to maintain an area to be cooled at a specific temperature.

The term "mass flow rate" is the amount "in pounds" of refrigerant passing through a conduit of a given size in a given amount of time.

In order to maintain reliability of the heat transfer system, it is preferred that the composition of the invention further exhibits the following characteristics compared with R-410A:
- the discharge temperature is not greater than 10°C higher than that of R-410A; and/or
- the compressor pressure ratio is from 95 to 105% of the compressor pressure ratio of R-410A
in heat transfer systems, in which the composition of the invention is used to replace the R-410A refrigerant.

It will be appreciated that R-410A is an azeotrope-like composition. Thus, in order for the claimed compositions to be a good match for the operating characteristics of R-410A, the claimed compositions desirably show a low level of glide. Thus, the compositions of the claimed invention may provide an evaporator glide of less than 2°C, preferably less than 1.5 °C.

The existing heat transfer compositions used with R-410A are preferably air conditioning heat transfer systems including both mobile and stationary air conditioning systems. Thus, each of the heat transfer compositions as described herein can be used to replace R-410A in any one of:
- an air conditioning system including a mobile air conditioning system, particularly an automobile air conditioning system,
- a mobile heat pump, particularly an electric vehicle heat pump;
- a chiller, particularly a positive displacement chiller, more particularly an air cooled or water cooled direct expansion chiller, which is either modular or conventionally singularly packaged,
- a residential air conditioning system, particularly a ducted split or a ductless split air conditioning system,
- a residential heat pump,
- a residential air to water heat pump/hydronic system,
- an industrial air conditioning system and
- a commercial air conditioning system particularly a packaged rooftop unit and a variable refrigerant flow (VRF) system;
- a commercial air source, water source or ground source heat pump system

The composition of the invention is alternatively provided to replace R410A in refrigeration systems. Thus, each of the heat transfer compositions as described herein can be used to replace R10A in in any one of:
- a low temperature refrigeration system,
- a medium temperature refrigeration system,
- a commercial refrigerator,
- a commercial freezer,
- an ice machine,
- a vending machine,
- a transport refrigeration system,
- a domestic freezer,
- a domestic refrigerator,
- an industrial freezer,
- an industrial refrigerator and
- a chiller.

Each of the heat transfer compositions described herein is particularly provided to replace R-410A in a residential air-conditioning system (with an evaporator temperature in the range of about 0 to about 10°C, particularly about 7°C for cooling and/or in the range of about -20 to about 3°C or 30 to about 5°C, particularly about 0.5°C for heating). Alternatively, or additionally, each of the heat transfer compositions described herein is particularly provided to replace R-410A in a residential air conditioning system with a reciprocating, rotary (rolling-piston or rotary vane) or scroll compressor.

Each of the heat transfer compositions described herein is particularly provided to replace R-410A in an air cooled chiller (with an evaporator temperature in the range of about 0 to about 10°C, particularly about 4.5°C), particularly an air cooled chiller with a positive displacement compressor, more particular an air cooled chiller with a reciprocating scroll compressor.

Each of the heat transfer compositions described herein is particularly provided to replace R-410A in a residential air to water heat pump hydronic system (with an evaporator temperature in the range of about -20 to about 3°C or about -30 to about 5°C, particularly about 0.5°C).

Each of the heat transfer compositions described herein is particularly provided to replace R-410A in a medium temperature refrigeration system (with an evaporator temperature in the range of about -12 to about 0°C, particularly about -8°C).

Each of the heat transfer compositions described herein is particularly provided to replace R-410A in a low temperature refrigeration system (with an evaporator temperature in the range of about -40 to about -12°C, particularly about -23°C or preferably about -32°C).

There is therefore provided a method of retrofitting an existing heat transfer system designed to contain or containing R-410A refrigerant or which is suitable for use with R-410A refrigerant, said method comprising replacing at least a portion of the existing R-410A refrigerant with a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and optionally a stabilizer composition comprising farnesene, diphenyl phosphite and BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition.

There is therefore provided a method of retrofitting an existing heat transfer system designed to contain or containing R-410A refrigerant or which is suitable for use with R-410A refrigerant, said method comprising replacing at least a portion of the existing R-410A refrigerant with a heat transfer composition comprising a refrigerant, said refrigerant consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and optionally a stabilizer composition comprising BHT wherein the BHT is provided in an amount of from about 0.001% by weight to about 5 % by weight based on the weight of heat transfer composition.

The invention further provides a heat transfer system comprising a compressor, a condenser and an evaporator in fluid communication, and a heat transfer composition in said system, said heat transfer composition consisting of a blend of three compounds, said blend consisting of:
about 50% by weight difluoromethane (HFC-32), about 11.5% by weight pentafluoroethane (HFC-125), and about 38.5% by weight trifluoroiodomethane (CF₃I)
wherein the percentages are based on the total weight of the three compounds in the blend; and a stabilizer composition comprising farnesene and diphenyl phosphite and/or BHT wherein the farnesene is provided in an amount of from about 0.001% by weight to about 5% by weight based on the weight of the heat transfer composition, the diphenyl phosphate is provided in an amount of from about 0.001% by weight to about 5% by weight based on the weight of the heat transfer composition and the BHT is provided in an amount of from about 0.001% by weight to about 5 % by weight based on the weight of heat transfer composition and from 10 to 60 wt.% of a polyol ester (POE) lubricant, based on the weight of the heat transfer composition, said condenser having an operating temperature of from +20°C to +70 °C and said evaporator having an operating temperature of from -40°C to +10 °C

Particularly, the heat transfer system is a residential air-conditioning system (with an evaporator temperature in the range of about 0 to about 10°C, particularly about 7°C for cooling and/or in the range of about -20 to about 3°C or about -30 to about 5°C, particularly about 0.5°C for heating).

Particularly, the heat transfer system is an air cooled chiller (with an evaporator temperature in the range of about 0 to about 10°C, particularly about 4.5°C), particularly an air cooled chiller with a positive displacement compressor, more particular an air cooled chiller with a reciprocating or scroll compressor.

Particularly, the heat transfer system is a residential air to water heat pump hydronic system (with an evaporator temperature in the range of about -20 to about 3°C or about -30 to about 5°C, particularly about 0.5°C).

The heat transfer system can be a refrigeration system, such as a low temperature refrigeration system, a medium temperature refrigeration system, a commercial refrigerator, a commercial freezer, an ice machine, a vending machine, a transport refrigeration system, a domestic freezer, a domestic refrigerator, an industrial freezer, an industrial refrigerator and a chiller.

Particularly, the heat transfer system is a medium temperature refrigeration system (with an evaporator temperature in the range of about -12 to about 0°C, particularly about -8°C).

Particularly, the heat transfer system is a low temperature refrigeration system (with an evaporator temperature in the range of about -40 to about -12°C, particularly about -23°C or preferably about -32°C).

The ability of the refrigerant compositions of this invention to match the operating conditions of R-410A is illustrated by the following non-limiting examples:

### EXAMPLES

The following refrigerant compositions were evaluated for their performance in a number of refrigeration systems.

Each composition was subjected to thermodynamic analysis to determine its ability to match the operating characteristics of R-410A in various refrigeration systems. The analysis was performed using experimental data collected for properties of the binary pairs. The vapour liquid equilibrium behavior of CF₃I was studied in a series of binary pairs with HFC-32 and HFC-125. The composition was varied over from 0% to 100% for each binary pair in the experimental evaluation. Mixture parameters for each binary pair were regressed to the experimentally obtained data and the parameters were also incorporated into the National Institute of Science and Technology (NIST) Reference Fluid Thermodynamic and Transport Properties Database (Refprop 9.1 NIST Std Database, 2013). The standard mixing parameters already available in Refprop 9.1 were used for other binary pairs. The assumptions used to conduct the analysis are the following: Same compressor displacement for all refrigerants, same operating conditions for all refrigerants, same compressor isentropic and volumetric efficiency for all refrigerants.

**Table 1: Refrigerant evaluated for Performance Examples**

| **Refrigerant** | **R32 (wt.%)** | **R125 (wt.%)** | **CF3I (wt.%)** |
|---|---|---|---|
| 1 | 48% | 11% | 41% |
| 2 | 50% | 11.5% | 38.5% |

**Table 2: Properties of Refrigerant 1 and 2**

| **Refrigerant** | **GWP** | **Capacity (% of R-410A)** | **COP (% of R-410A)** | **Evap Glide (°C)** | **Flammability** | **OEL** |
|---|---|---|---|---|---|---|
| 1 | 709 | 97% | 102% | 1.25 | Non Flammable | 508 |
| 2 | 740 | 98% | 102% | 1.01 | Non Flammable | 530 |

### Example 1. Residential Air-Conditioning System (Cooling)

### Description:

Residential air-conditioning systems are used to supply cool air (about 12°C) to buildings in the summer. Typical system types are split, mini-split, and window air-conditioning system. The system usually has an air-to-refrigerant evaporator (indoor coil), a compressor, an air-to-refrigerant condenser (outdoor coil), and an expansion valve. The evaporator and condenser is usually round tube plate fin or microchannel heat exchanger. The compressor is usually reciprocating or rotary (rolling-piston or scroll) compressor. The expansion valve is usually thermal or electronic expansion valve. The refrigerant evaporating temperature is in the range of about 0 to about 10°C, while the condensing temperature is in the range of about 40 to about 70 °C.

### Operating conditions:

1. Condensing temperature= 46°C, Corresponding outdoor ambient temperature= 35°C
2. Condenser sub-cooling= 5.5°C
3. Evaporating temperature= 7°C, Corresponding indoor ambient temperature= 26.7°C
4. Evaporator Superheat= 5.5°C
5. Isentropic Efficiency= 70%
6. Volumetric Efficiency= 100%
7. Temperature Rise in Suction Line=5.5°C

**Table 3. Performance in Residential Air-Conditioning System (Cooling)**

| Refrigeran t | Capacity | Efficiency | Pressure ratio | Discharg e Pressure [kPa] | Discharge Temperatur e Difference [°C] | Evaporato r Glide [°C] |
|---|---|---|---|---|---|---|
| R-410A | 100% | 100% | 100% | 100% | 0 | 0.08 |
| 1 | 97% | 102% | 99% | 94% | 7.8 | 1.25 |
| 2 | 98% | 102% | 99% | 95% | 7.9 | 1.01 |

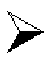 Table 3 shows the thermodynamic performance of a residential air-conditioning system compared to R-410A system.
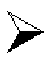 Compositions 1 and 2 show 95% or higher capacity (considering ±2% uncertainty) and matched efficiency compared to R-410A. This indicates the system performance is similar to R-410A.
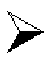 Compositions 1 and 2 show 99% pressure ratio compared to R-410A. This indicates the compressor efficiencies are similar to R-410A, and no changes on R-410A compressor are needed.
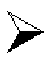 Compositions 1 and 2 show discharge temperature rise within 10°C compared to R-410A. This indicates good compressor reliability and there is no risk of oil breakdown or motor burn-out.
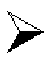 Compositions 1 and 2 show evaporator glide less than 2°C. This indicates the evaporator glide does not affect system performance.

### Example 2. Residential Heat pump System (Heating)

### Description:

Residential heat pump systems are used to supply warm air (about 21°C) to buildings in the winter. It is usually the same system as the residential air-conditioning system, however, when the system in the heat pump mode the refrigerant flow is reversed and the indoor coil becomes condenser and the outdoor coil becomes evaporator. Typical system types are split and mini-split heat pump system. The evaporator and condenser is usually round tube plate fin or microchannel heat exchanger. The compressor is usually reciprocating or rotary (rolling-piston or scroll) compressor. The expansion valve is usually thermal or electronic expansion valve. The refrigerant evaporating temperature is in the range of about -20 to about 3°C, while the condensing temperature is in the range of about 35 to about 50°C.

### Operating conditions:

1. Condensing temperature= 41°C, Corresponding indoor ambient temperature= 21.1°C
2. Condenser sub-cooling= 5.5°C
3. Evaporating temperature= 0.5°C, Corresponding outdoor ambient temperature= 8.3°C
4. Evaporator Superheat= 5.5°C
5. Isentropic Efficiency= 70%
6. Volumetric Efficiency= 100%
7. Temperature Rise in Suction Line=5.5°C

**Table 4. Performance in Residential Heat pump System (Heating)**

| Refrigeran t | Heating Capacity | Heating Efficiency | Pressure ratio | Discharg e Pressure [kPa] | Discharge Temperatur e Difference [°C] | Evaporato r Glide [°C] |
|---|---|---|---|---|---|---|
| R-410A | 100% | 100% | 100% | 100% | 0 | 0.08 |
| 1 | 97% | 101% | 99% | 94% | 8.4 | 1.20 |
| 2 | 98% | 101% | 99% | 95% | 8.5 | 0.95 |

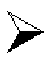 Table 4 shows the thermodynamic performance of a residential heat pump system compared to R-410A system.
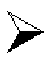 Compositions 1 and 2 show 95% capacity (considering ±2% uncertainty) and matched efficiency compared to R-410A. This indicates the system performance is similar to R-410A.
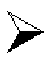 Compositions 1 and 2 show 99% pressure ratio compared to R-410A. This indicates the compressor efficiencies are similar to R-410A, and no changes on R410A compressor are needed.
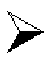 Compositions 1 and 2 show discharge temperature rise within 10°C compared to R-410A. This indicates good compressor reliability and there is no risk of oil breakdown or motor burn-out.
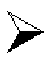 Compositions 1 and 2 show evaporator glide less than 2°C. This indicates the evaporator glide does not affect system performance.

### Example 3. Commercial Air-Conditioning System - Chiller

### Description:

Commercial air-conditioning systems (chillers) are used to supply chilled water (about 7°C) to large buildings such as offices, hospitals, etc. Depending on the application, the chiller system may be running all year long. The chiller system may be air-cooled or water-cooled. The air-cooled chiller usually has a plate or shell-and-tube evaporator to supply chilled water, a reciprocating or scroll compressor, a round tube plate fin or microchannel condenser to exchange heat with ambient air, and a thermal or electronic expansion valve. The water-cooled system usually has a shell-and-tube evaporator to supply chilled water, a reciprocating or scroll compressor, a shell-and-tube condenser to exchange heat with water from cooling tower or lake, sea and other natural recourses, and a thermal or electronic expansion valve. The refrigerant evaporating temperature is in the range of about 0 to about 10°C, while the condensing temperature is in the range of about 40 to about 70 °C.

### Operating conditions:

1. Condensing temperature= 46°C, Corresponding outdoor ambient temperature= 35°C
2. Condenser sub-cooling= 5.5°C
3. Evaporating temperature= 4.5°C, Corresponding chilled leaving water temperature= 7°C
4. Evaporator Superheat= 5.5°C
5. Isentropic Efficiency= 70%
6. Volumetric Efficiency= 100%
7. Temperature Rise in Suction Line=2°C

**Table 5. Performance in Commercial Air-Conditioning System - Air-Cooled Chiller**

| Refrigeran t | Capacity | Efficiency | Pressure ratio | Discharg e Pressure [kPa] | Discharge Temperatur e Difference [°C] | Evaporato r Glide [°C] |
|---|---|---|---|---|---|---|
| R-410A | 100% | 100% | 100% | 100% | 0 | 0.08 |
| 1 | 98% | 102% | 99% | 94% | 8.2 | 1.22 |
| 2 | 99% | 102% | 99% | 95% | 8.3 | 0.98 |

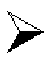 Table 5 shows the thermodynamic performance of a commercial air-cooled chiller system compared to R-410A system.
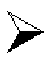 Compositions 1 and 2 show 95% or higher capacity (considering ±2% uncertainty) and matched efficiency compared to R-410A. This indicates the system performance is similar to R-410A.
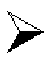 Compositions 1 and 2 show 99% pressure ratio compared to R-410A. This indicates the compressor efficiencies are similar to R-410A, and no changes on R-410A compressor are needed.
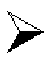 Compositions 1 and 2 show discharge temperature rise within 10°C compared to R-410A. This indicates good compressor reliability and there is no risk of oil breakdown or motor burn-out.
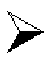 Compositions 1 and 2 show evaporator glide less than 2°C. This indicates the evaporator glide does not affect system performance.

### Example 4. Residential Air-to-Water Heat Pump Hydronic System

### Description:

Residential air-to-water heat pump hydronic systems are used to supply hot water (about 50°C) to buildings for floor heating or similar applications in the winter. The hydronic system usually has a round tube plate fin or microchannel evaporator to exchange heat with ambient air, a reciprocating or rotary compressor, a plate condenser to heat the water, and a thermal or electronic expansion valve. The refrigerant evaporating temperature is in the range of about -20 to about 3°C, while the condensing temperature is in the range of about 50 to about 90 °C.

### Operating conditions:

1. Condensing temperature= 60°C, Corresponding indoor leaving water temperature= 50°C
2. Condenser sub-cooling= 5.5°C
3. Evaporating temperature= 0.5°C, Corresponding outdoor ambient temperature= 8.3°C
4. Evaporator Superheat= 5.5°C
5. Isentropic Efficiency= 70%
6. Volumetric Efficiency= 100%
7. Temperature Rise in Suction Line=2°C

**Table 6. Performance in Residential Air-to-Water Heat Pump Hydronic System**

| Refrigeran t | Heating Capacity | Heating Efficiency | Pressure ratio | Discharg e Pressure [kPa] | Discharge Temperatur e Difference [°C] | Evaporato r Glide [°C] |
|---|---|---|---|---|---|---|
| R-410A | 100% | 100% | 100% | 100% | 0 | 0.06 |
| 1 | 99% | 103% | 98% | 94% | 11.6 | 1.08 |
| 2 | 100% | 103% | 98% | 95% | 11.9 | 0.85 |

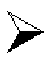 Table 6 shows the thermodynamic performance of a residential air-to-water heat pump hydronic system compared to R-410A system.
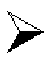 Compositions 1 and 2 show 95% or higher capacity and matched efficiency compared to R410A. This indicates the system performance is similar to R-410A.
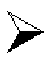 Compositions 1 and 2 show 98% - 99% pressure ratio compared to R-410A. This indicates the compressor efficiencies are similar to R-410A, and no changes on R-410A compressor are needed.
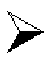 Compositions 1 and 2 show discharge temperature rise close to 10°C compared to R-410A. This indicates good compressor reliability and there is no risk of oil breakdown or motor burn-out.
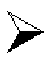 Compositions 1 and 2 show evaporator glide less than 2°C. This indicates the evaporator glide does not affect system performance.

### Example 5. Medium Temperature Refrigeration System

### Description:

Medium temperature refrigeration systems are used to chill food or beverages such as in a refrigerator and bottle cooler. The system usually has an air-to-refrigerant evaporator to chill the food or beverage, a reciprocating or rotary compressor, an air-to-refrigerant condenser to exchange heat with the ambient air, and a thermal or electronic expansion valve. The refrigerant evaporating temperature is in the range of about -12 to about 0°C, while the condensing temperature is in the range of about 40 to about 70 °C.

### Operating conditions:

1. Condensing temperature= 45°C, Corresponding outdoor ambient temperature= 35°C
2. Condenser sub-cooling= 5.5°C
3. Evaporating temperature= -8°C, Corresponding box temperature= 1.7°C
4. Evaporator Superheat= 5.5°C
5. Isentropic Efficiency= 65%
6. Volumetric Efficiency= 100%
7. Temperature Rise in Suction Line=10°C

**Table 7. Performance in Medium Temperature Refrigeration System**

| Refrigeran t | Capacity | Efficiency | Pressure ratio | Discharg e Pressure [kPa] | Discharge Temperatur e Difference [°C] | Evaporato r Glide [°C] |
|---|---|---|---|---|---|---|
| R-410A | 100% | 100% | 100% | 100% | 0 | 0.07 |
| 1 | 99% | 102% | 98% | 94% | 12.5 | 1.07 |
| 2 | 100% | 102% | 98% | 95% | 12.8 | 0.83 |

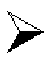 Table 7 shows the thermodynamic performance of a medium temperature refrigeration system compared to R-410A system.
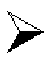 Compositions 1 and 2 show 95% or higher capacity and matched efficiency compared to R-410A. This indicates the system performance is similar to R-410A.
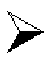 Compositions 1 and 2 show 98% - 99% pressure ratio compared to R-410A. This indicates the compressor efficiencies are similar to R-410A, and no changes on R-410A compressor are needed.
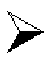 Compositions 1 and 2 show discharge temperature rise close to 10°C compared to R-410A. This indicates good compressor reliability and there is no risk of oil breakdown or motor burn-out.
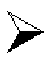 Compositions 1 and 2 show evaporator glide less than 2°C. This indicates the evaporator glide does not affect system performance.

### Example 6. Low Temperature Refrigeration System

### Description:

Low temperature refrigeration systems are used to freeze food such as in an ice cream machine and a freezer. The system usually has an air-to-refrigerant evaporator to chill the food or beverage, a reciprocating or rotary compressor, an air-to-refrigerant condenser to exchange heat with the ambient air, and a thermal or electronic expansion valve. The refrigerant evaporating temperature is in the range of about -40 to about -12°C, while the condensing temperature is in the range of about 40 to about 70 °C.

### Operating conditions:

1. Condensing temperature= 55°C, Corresponding outdoor ambient temperature= 35°C
2. Condenser sub-cooling= 5°C
3. Evaporating temperature= -23°C, Corresponding box temperature= 1.7°C
4. Evaporator Superheat= 5.5°C
5. Isentropic Efficiency= 60%
6. Volumetric Efficiency= 100%
7. Temperature Rise in Suction Line=1°C

**Table 8. Performance in Low Temperature Refrigeration System**

| Refrigerant | Capacity | Efficiency | Pressure ratio | Discharge Pressure [kPa] | Dicharge Temperature Difference [°C] | Evaporator Glide [°C] |
|---|---|---|---|---|---|---|
| R-410A | 100% | 100% | 100% | 100% | 0 | 0.05 |
| 1 | 103% | 105% | 97% | 94% | 20.1 | 0.82 |
| 2 | 104% | 105% | 97% | 95% | 20.7 | 0.61 |

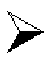 Table 8 shows the thermodynamic performance of a low temperature refrigeration system compared to R-410A system.
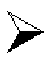 Compositions 1 and 2 show 98% or higher capacity and matched efficiency compared to R-410A. This indicates the system performance is similar to R-410A.
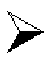 Compositions 1 and 2 show 97% - 98% pressure ratio compared to R-410A. This indicates the compressor efficiencies are similar to R-410A, and no changes on R-410A compressor are needed.
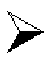 Compositions 1 and 2 show evaporator glide less than 2°C. This indicates the evaporator glide does not affect system performance.

### Example 7 - Stabilizers for Refrigerant/Lubricant Thermal Stability Example

### Description:

The use of additives such as stabilizers ensures that the composition of the refrigerant and lubricant are effectively unchanged through the normal operation of the equipment to which it is charged. Refrigerants and lubricants are typically tested against ASHRAE Standard 97 - "Sealed Glass Tube Method to Test the Chemical Stability of Materials for Use within Refrigerant Systems" to simulate accelerated aging. After testing, the level of halides is used to judge refrigerant stability and the total acid number (TAN) is used to judge lubricant stability. In addition, the lubricant should be clear and colorless, the metals should be shiny (unchanged), and there should be no solids present.

The following experiment is carried out to show the effect of the addition of a stabilizer on a refrigerant/lubricant composition.

### Sealed Tube Test Conditions:

**1.** Sealed tubes contain 50% refrigerant and 50% lubricant by weight
**2.** Refrigerant is as set out in table 9 below
**3.** Lubricant is an ISO 68 POE
**4.** Refrigerant and Lubricant have been degassed
**5.** Refrigerant contains <10 ppm moisture
**6.** Lubricant contains <30 ppm moisture
**7.** Sealed tubes contain coupons of steel, copper and aluminum
**8.** Sealed tubes are placed in oven at 175 °C for 14 days

**Table 9 - Composition of refrigerant**

| Refrigerant | HFC-32 (wt. %) | HFC-125 (wt.%) | CF₃I (wt. %) |
|---|---|---|---|
| 1 | 50% | 11.5% | 38.5% |

**Table 10. Summary of desired outcome of experiment**

| The aim of the experiment is to obtain the following results: | | | | |
|---|---|---|---|---|
| **Lubricant visual** | **Metals visual** | **Solids present?** | **Halides [ppm]** | **TAN [mgKOH/g]** |
| Clear, colorless | shiny | no | < 300 | < 3.0 |

**Table 11. Analysis of Refrigerant and Lubricant after Sealed Tube Testing**

| Comp. | Additives | Lubricant visual | Metals visual | Solids present? | Halides [ppm] | TAN [mgKOH/g] |
|---|---|---|---|---|---|---|
| 1 | None | Opaque, black | dull | yes | > 400 | > 10 |
| 2 | 2% Farnesene + 2% Diphenylphosphite | Clear, colorless | shiny | no | < 300 | < 3.0 |
| 3 | 0.75% Farnesene + 0.75% Diphenylphosphite | Clear, colorless | shiny | no | < 300 | < 3.0 |

- Sealed tube testing is carried out at 175 °C for 14 days
- No thermal stability conditions are met with no stabilizer present
- With 0.75wt% or 2 wt.% each of Farnesene and Diphenylphosphite all test conditions are met. This combination of refrigerant, lubricant and stabilizer is of similar thermal stability to other commercial refrigerants such as R-410A.

**Table 12: Refrigerant evaluated for Performance Examples**

| **Refrigerant** | **R32 (wt.%)** | **R125 (wt.%)** | **CF3I (wt.%)** |
|---|---|---|---|
| **1** | **48%** | **11%** | **41%** |
| **2** | **46%** | **12%** | **42%** |

**Table 13: Properties of Refrigerant 1 and 2**

| **Refrigerant** | **GWP** | **Capacity (% of R-410A)** | **COP (% of R-410A)** | **Evap Glide (°C)** | **Flammability** | **OEL** |
|---|---|---|---|---|---|---|
| **1** | **709** | **97%** | **102%** | **1.25** | **Non Flammable** | **508** |
| **2** | **731** | **97%** | **102%** | **1.41** | **Non Flammable** | **497** |

### Example 8. Residential Air-Conditioning System (Cooling)

### Description:

Residential air-conditioning systems are used to supply cool air (about 12°C) to buildings in the summer. Typical system types are ducted split, ductless split, window and portable air-conditioning system. The system usually has an air-to-refrigerant evaporator (indoor coil), a compressor, an air-to-refrigerant condenser (outdoor coil), and an expansion device. The evaporator and condenser are usually finned tube or microchannel heat exchangers. The compressor is usually reciprocating, rotary (rolling-piston or rotary valve) or scroll compressor. The expansion device is usually a capillary tube, a thermal or electronic expansion valve. The refrigerant evaporating temperature is in the range of about 0 to about 10°C, while the condensing temperature is in the range of about 40 to about 70 °C.

### Operating conditions:

8. Condensing temperature= 46°C, Corresponding outdoor ambient temperature= 35°C
9. Condenser sub-cooling= 5.5°C
10. Evaporating temperature= 7°C, Corresponding indoor ambient temperature= 26.7°C
11. Evaporator Superheat= 5.5°C
12. Isentropic Efficiency= 70%
13. Volumetric Efficiency= 100%
14. Temperature Rise in Suction Line=5.5°C

**Table 14. Performance in Residential Air-Conditioning System (Cooling)**

| Refrigerant | Capacity | Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.08 |
| 1 | 97% | 102% | 99% | 94% | 7.8 | 1.25 |
| 2 | 97% | 102% | 99% | 94% | 7.2 | 1.41 |

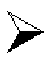 Table 14 shows the thermodynamic performance of a residential air-conditioning system compared to R-410A system.
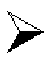 Compositions 1 and 2 show 95% or higher capacity (considering ±2% uncertainty) and matched efficiency compared to R-410A. This indicates the system performance is similar to R-410A.
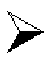 Compositions 1 and 2 show 99% pressure ratio compared to R-410A. This indicates the compressor efficiencies are similar to R-410A, and no changes on R-410A compressor are needed.
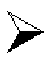 Compositions 1 and 2 show discharge temperature rise within 10°C compared to R-410A. This indicates good compressor reliability and there is no risk of oil breakdown or motor burn-out.
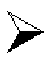 Compositions 1 and 2 show evaporator glide less than 2°C. This indicates the evaporator glide does not affect system performance.

### Example 9. Residential Heat pump System (Heating)

### Description:

Residential heat pump systems are used to supply warm air (about 21°C) to buildings in the winter. It is usually the same system as the residential air-conditioning system, however, when the system in the heat pump mode the refrigerant flow is reversed and the indoor coil becomes condenser and the outdoor coil becomes evaporator. Typical system types are ducted split and ductless split heat pump system. The evaporator and condenser are usually finned tube or microchannel heat exchangers. The compressor is usually a reciprocating or rotary (rolling-piston or rotary vane) or scroll compressor. The expansion device is usually a capillary tube, a thermal or electronic expansion valve. The refrigerant evaporating temperature is in the range of about -30 to about 5°C, while the condensing temperature is in the range of about 35 to about 50 °C.

### Operating conditions:

8. Condensing temperature= 41 °C, Corresponding indoor ambient temperature= 21.1°C
9. Condenser sub-cooling= 5.5°C
10. Evaporating temperature= 0.5°C, Corresponding outdoor ambient temperature= 8.3°C
11. Evaporator Superheat= 5.5°C
12. Isentropic Efficiency= 70%
13. Volumetric Efficiency= 100%
14. Temperature Rise in Suction Line=5.5°C

**Table 15. Performance in Residential Heat pump System (Heating)**

| Refrigerant | Heating Capacity | Heating Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.08 |
| 1 | 97% | 101% | 99% | 94% | 8.4 | 1.20 |
| 2 | 97% | 101% | 99% | 93% | 7.8 | 1.36 |

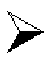 Table 15 shows the thermodynamic performance of a residential heat pump system compared to R-410A system.
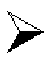 Compositions 1 and 2 show 95% capacity (considering ±2% uncertainty) and matched efficiency compared to R-410A. This indicates the system performance is similar to R-410A.
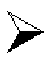 Compositions 1 and 2 show 99% pressure ratio compared to R-410A. This indicates the compressor efficiencies are similar to R-410A, and no changes on R-410A compressor are needed.
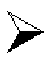 Compositions 1 and 2 show discharge temperature rise within 10°C compared to R-410A. This indicates good compressor reliability and there is no risk of oil breakdown or motor burn-out.
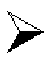 Compositions 1 and 2 show evaporator glide less than 2°C. This indicates the evaporator glide does not affect system performance.

### Example 10. Commercial Air-Conditioning System - Chiller

### Description:

Commercial air-conditioning systems (chillers) are used to supply chilled water (about 7°C) to large buildings such as offices, hospitals, etc. Depending on the application, the chiller system may be running all year long. The chiller system may be air-cooled or water-cooled. The air-cooled chiller usually has a plate, tube-in-tube or shell-and-tube evaporator to supply chilled water, a reciprocating or scroll compressor, a round tube plate fin or microchannel condenser to exchange heat with ambient air, and a thermal or electronic expansion valve. The water-cooled system usually has a shell-and-tube evaporator to supply chilled water, a reciprocating or scroll compressor, a shell-and-tube condenser to exchange heat with water from cooling tower or lake, sea and other natural recourses, and a thermal or electronic expansion valve. The refrigerant evaporating temperature is in the range of about 0 to about 10°C, while the condensing temperature is in the range of about 40 to about 70 °C.

### Operating conditions:

8. Condensing temperature= 46°C, Corresponding outdoor ambient temperature= 35°C
9. Condenser sub-cooling= 5.5°C
10. Evaporating temperature= 4.5°C, Corresponding chilled leaving water temperature= 7°C
11. Evaporator Superheat= 5.5°C
12. Isentropic Efficiency= 70%
13. Volumetric Efficiency= 100%
14. Temperature Rise in Suction Line=2°C

**Table 16. Performance in Commercial Air-Conditioning System - Air-Cooled Chiller**

| Refrigerant | Capacity | Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.08 |
| 1 | 98% | 102% | 99% | 94% | 8.2 | 1.22 |
| 2 | 97% | 102% | 99% | 94% | 7.6 | 1.38 |

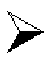 Table 16 shows the thermodynamic performance of a commercial air-cooled chiller system compared to R-410A system.
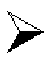 Compositions 1 and 2 show 95% or higher capacity (considering ±2% uncertainty) and matched efficiency compared to R-410A. This indicates the system performance is similar to R-410A.
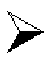 Compositions 1 and 2 show 99% pressure ratio compared to R-410A. This indicates the compressor efficiencies are similar to R-410A, and no changes on R-410A compressor are needed.
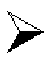 Compositions 1 and 2 show discharge temperature rise within 10°C compared to R-410A. This indicates good compressor reliability and there is no risk of oil breakdown or motor burn-out.
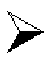 Compositions 1 and 2 show evaporator glide less than 2°C. This indicates the evaporator glide does not affect system performance.

### Example 11. Residential Air-to-Water Heat Pump Hydronic System

### Description:

Residential air-to-water heat pump hydronic systems are used to supply hot water (about 55°C) to buildings for floor heating or similar applications in the winter. The hydronic system usually has a finned tube or microchannel evaporator to exchange heat with ambient air, a reciprocating, rotary or scroll compressor, a plate, tube-in-tube or shell-and-tube condenser to heat the water, and a thermal or electronic expansion valve. The refrigerant evaporating temperature is in the range of about -30 to about 5°C, while the condensing temperature is in the range of about 50 to about 90 °C.

### Operating conditions:

8. Condensing temperature= 60°C, Corresponding indoor leaving water temperature= 50°C
9. Condenser sub-cooling= 5.5°C
10. Evaporating temperature= 0.5°C, Corresponding outdoor ambient temperature= 8.3°C
11. Evaporator Superheat= 5.5°C
12. Isentropic Efficiency= 70%
13. Volumetric Efficiency= 100%
14. Temperature Rise in Suction Line=2°C

**Table 17. Performance in Residential Air-to-Water Heat Pump Hydronic System**

| Refrigerant | Heating Capacity | Heating Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.06 |
| 1 | 99% | 103% | 98% | 94% | 11.6 | 1.08 |
| 2 | 98% | 102% | 98% | 93% | 10.7 | 1.23 |

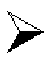 Table 17 shows the thermodynamic performance of a residential air-to-water heat pump hydronic system compared to R-410A system.
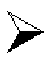 Compositions 1 and 2 show 95% or higher capacity and matched efficiency compared to R-410A. This indicates the system performance is similar to R-410A.
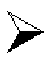 Compositions 1 and 2 show 98% - 99% pressure ratio compared to R-410A. This indicates the compressor efficiencies are similar to R-410A, and no changes on R-410A compressor are needed.
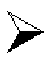 Compositions 1 and 2 show discharge temperature rise close to 10°C compared to R-410A. This indicates good compressor reliability and there is no risk of oil breakdown or motor burn-out.
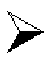 Compositions 1 and 2 show evaporator glide less than 2°C. This indicates the evaporator glide does not affect system performance.

### Example 12. Medium Temperature Refrigeration System

### Description:

Medium temperature refrigeration systems are used to chill food or beverages such as in a refrigerator and bottle cooler. The system usually has an air-to-refrigerant evaporator to chill the food or beverage, a reciprocating, scroll or screwcompressor, an air-to-refrigerant condenser to exchange heat with the ambient air, and a thermal or electronic expansion valve. The refrigerant evaporating temperature is in the range of about -12 to about 0°C, while the condensing temperature is in the range of about 20 to about 70 °C.

### Operating conditions:

8. Condensing temperature= 45°C, Corresponding outdoor ambient temperature= 35°C
9. Condenser sub-cooling= 5.5°C
10. Evaporating temperature= -8°C, Corresponding box temperature= 1.7°C
11. Evaporator Superheat= 5.5°C
12. Isentropic Efficiency= 65%
13. Volumetric Efficiency= 100%
14. Temperature Rise in Suction Line=10°C

**Table 18. Performance in Medium Temperature Refrigeration System**

| Refrigerant | Capacity | Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.07 |
| 1 | 99% | 102% | 98% | 94% | 12.5 | 1.07 |
| 2 | 98% | 102% | 98% | 94% | 11.5 | 1.22 |

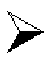 Table 18 shows the thermodynamic performance of a medium temperature refrigeration system compared to R-410A system.
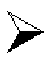 Compositions 1 and 2 show 95% or higher capacity and matched efficiency compared to R-410A. This indicates the system performance is similar to R-410A.
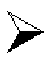 Compositions 1 and 2 show 98% - 99% pressure ratio compared to R-410A. This indicates the compressor efficiencies are similar to R-410A, and no changes on R-410A compressor are needed.
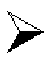 Compositions 1 and 2 show discharge temperature rise close to 10°C compared to R-410A. This indicates good compressor reliability and there is no risk of oil breakdown or motor burn-out.
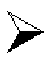 Compositions 1 and 2 show evaporator glide less than 2°C. This indicates the evaporator glide does not affect system performance.

### Example 13. Low Temperature Refrigeration System

### Description:

Low temperature refrigeration systems are used to freeze food such as in an ice cream machine and a freezer. The system usually has an air-to-refrigerant evaporator, a reciprocating, scroll or screwcompressor, an air-to-refrigerant condenser to exchange heat with the ambient air, and a thermal or electronic expansion valve. The refrigerant evaporating temperature is in the range of about -40 to about -12°C, while the condensing temperature is in the range of about 20 to about 70 °C.

### Operating conditions:

8. Condensing temperature= 55°C, Corresponding outdoor ambient temperature= 35°C
9. Condenser sub-cooling= 5°C
10. Evaporating temperature= -23°C, Corresponding box temperature= 1.7°C
11. Evaporator Superheat= 5.5°C
12. Isentropic Efficiency= 60%
13. Volumetric Efficiency= 100%
14. Temperature Rise in Suction Line=1°C

**Table 19. Performance in Low Temperature Refrigeration System**

| Refrigerant | Capacity | Efficiency | Pressure ratio | Discharge Pressure [kPa] | Discharge Temperature Difference [°C] | Evaporator Glide [°C] |
|---|---|---|---|---|---|---|
| R-410A | 100% | 100% | 100% | 100% | 0 | 0.05 |
| 1 | 103% | 105% | 97% | 94% | 20.1 | 0.82 |
| 2 | 102% | 104% | 97% | 93% | 18.4 | 0.97 |

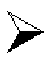 Table 19 shows the thermodynamic performance of a low temperature refrigeration system compared to R-410A system.
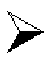 Compositions 1 and 2 show 98% or higher capacity and matched efficiency compared to R-410A. This indicates the system performance is similar to R-410A.
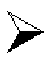 Compositions 1 and 2 show 97% - 98% pressure ratio compared to R-410A. This indicates the compressor efficiencies are similar to R-410A, and no changes on R-410A compressor are needed.
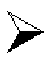 Compositions 1 and 2 show evaporator glide less than 2°C. This indicates the evaporator glide does not affect system performance.

### Example 7 - Stabilizers for Refrigerant/Lubricant Thermal Stability Example

### Description:

The use of additives such as stabilizers ensures that the composition of the refrigerant and lubricant are effectively unchanged through the normal operation of the equipment to which it is charged. Refrigerants and lubricants are typically tested against ASHRAE Standard 97 - "Sealed Glass Tube Method to Test the Chemical Stability of Materials for Use within Refrigerant Systems" to simulate accelerated aging. After testing, the level of halides is used to judge refrigerant stability and the total acid number (TAN) is used to judge lubricant stability. In addition, the lubricant should be clear and colorless, the metals should be shiny (unchanged), and there should be no solids present.

The following experiment is carried out to show the effect of the addition of a stabilizer on a refrigerant/lubricant composition.

### Sealed Tube Test Conditions:

**1.** Sealed tubes contain 50% refrigerant and 50% lubricant by weight
**2.** Refrigerant is as set out in table 9 below
**3.** Lubricant is an ISO 68 POE
**4.** Refrigerant and Lubricant have been degassed
**5.** Refrigerant contains <10 ppm moisture
**6.** Lubricant contains <30 ppm moisture
**7.** Sealed tubes contain coupons of steel, copper and aluminum
**8.** Sealed tubes are placed in oven at 175 °C for 14 days

**Table 20 - Composition of refrigerant**

| Refrigerant | HFC-32 (wt. %) | HFC-125 (wt.%) | CF₃I (wt. %) |
|---|---|---|---|
| 1 | 46% | 12% | 42% |

**Table 21. Summary of desired outcome of experiment**

| The aim of the experiment is to obtain the following results: | | | | |
|---|---|---|---|---|
| **Lubricant visual** | **Metals visual** | **Solids present?** | **Halides [ppm]** | **ΔTAN [mgKOH/g]** |
| Clear, colorless | shiny | no | < 300 | < 3.0 |

**Table 22. Analysis of Refrigerant and Lubricant after Sealed Tube Testing**

| Comp. | Additives | Lubricant visual | Metals visual | Solids present? | Halides [ppm] | ΔTAN [mgKOH/g] |
|---|---|---|---|---|---|---|
| 1 | None | Opaque, black | dull | yes | > 400 | > 10 |
| 2 | 0.75% Farnesene + 0.75% Diphenylphosphite | Clear, colorless | shiny | no | < 300 | < 3.0 |

- Sealed tube testing is carried out at 175 °C for 14 days
- No thermal stability conditions are met with no stabilizer present
- With 2 wt.% each of Farnesene and Diphenylphosphite all test conditions are met. This combination of refrigerant, lubricant and stabilizer is of similar thermal stability to other commercial refrigerants such as R-410A.

### Example 15 - Miscibility with POE oil.

POE oil is widely used in air-conditioning and refrigeration systems.

As set out in table 23 below and as illustrated in figure 1, R-410A is immiscible with POE oil below -22 °C. R-410A cannot therefore be used in low temperature refrigeration applications as POE oil will stay and accumulate in the evaporator.

Furthermore, R-410A is immiscible with POE oil above 50°C, which will cause problems in the condenser and liquid line (e.g. the separated POE oil will be trapped and accumulated) when R-410A is used in high ambient conditions.

Conversely, a refrigerant consisting of
about 46% by weight difluoromethane (HFC-32),
about 12% by weight pentafluoroethane (HFC-125), and
about 42% by weight trifluoroiodomethane (CF₃I)according to the present invention is fully miscible with POE oil across a temperature range of -40°C to 80°C, as set out in table 23 below:

**Table 23: Miscibility of refrigerant with POE-32 Oil**

| **Liquid Refrigerant Mass Fraction in the Refrigerant and Oil Mixture (g/g)** | **R-410A Miscibility Temperature Range** | | **Refrigerant of the invention** |
|---|---|---|---|
| | **Lower Limit** | **Upper Limit** | |
| **60%** | **-26°C** | **N/A** | **Fully Miscible** |
| **70%** | **-23°C** | **55°C** | **Fully Miscible** |
| **80%** | **-22°C** | **48°C** | **Fully Miscible** |
| **90%** | **-31°C** | **50°C** | **Fully Miscible** |

## Claims

1. A refrigerant consisting of a blend of three compounds, said blend consisting of:
from 48% by weight to 51% by weight difluoromethane (HFC-32),
from 9.5% by weight to 11.5% by weight pentafluoroethane (HFC-125), and
from 36.5% by weight to 40.5% by weight trifluoroiodomethane (CF₃I).
wherein the percentages are based on the total weight of the three compounds in the blend, and wherein the amount of each compound can vary by an amount of ± 2% by weight, preferably ± 1% by weight, more preferably ± 0.5% by weight.

2. The refrigerant as claimed in claim 1 wherein said blend consists of
50% by weight difluoromethane (HFC-32),
11.5% by weight pentafluoroethane (HFC-125), and
38.5% by weight trifluoroiodomethane (CF₃I).
wherein the percentages are based on the total weight of the three compounds in the blend and wherein the amount of each compound can vary by an amount of ± 2% by weight, preferably ± 1% by weight, more preferably ± 0.5% by weight.

3. The refrigerant as claimed in claim 1 wherein said blend consists of
48% by weight difluoromethane (HFC-32),
11.5% by weight pentafluoroethane (HFC-125), and
40.5% by weight trifluoroiodomethane (CF₃I).
wherein the percentages are based on the total weight of the three compounds in the blend and wherein the amount of each compound can vary by an amount of ± 2% by weight, preferably ± 1% by weight, more preferably ± 0.5% by weight.

4. The refrigerant as claimed in claim 1 wherein said blend consists of
48% ± 0.5% by weight difluoromethane (HFC-32),
11.5% ± 0.5% by weight pentafluoroethane (HFC-125), and
40.5% ± 0.5% by weight trifluoroiodomethane (CF₃I).
wherein the percentages are based on the total weight of the three compounds in the blend.

5. A heat transfer composition comprising a refrigerant as claimed in any one of claims 1 to 4,
preferably, wherein the refrigerant comprises greater than 40% by weight of the heat transfer composition.

6. A heat transfer composition comprising a refrigerant as claimed in any one of claims 1 to 4 and a stabilizer composition, wherein the stabilizer composition comprises BHT in an amount of from about 0.001% by weight to about 5 % by weight of the heat transfer composition, or
wherein the stabilizer composition consists of BHT in an amount of from about 0.001% by weight to about 5 % by weight.

7. The heat transfer composition of claim 5 or claim 6 further comprising a lubricant selected from the group consisting of polyol esters (POEs), polyalkylene glycols (PAGs), PAG oils, silicone oils, mineral oil, alkylbenzenes (ABs), polyvinyl ethers (PVE) and poly(alpha-olefin) (PAO).

8. The heat transfer composition of claim 7 wherein the lubricant is a polyol ester (POE).

9. The heat transfer composition of claim 7 wherein the lubricant is a polyvinyl ether (PVE).

10. The heat transfer composition of claim 5 wherein
(a) the heat transfer composition consists essentially of the refrigerant as claimed in any one of claims 1 to 4 or
(b) the heat transfer composition of any one of claims 5 to 9 wherein the heat transfer composition consists essentially of the refrigerant as claimed in any one of claims 1 to 4 and the stabilizer composition as claimed in claim 6, or
(c) the heat transfer composition of any one of claims 5 to 9 wherein the heat transfer composition consists essentially of the refrigerant as claimed in any one of claims 1 to 4, the stabilizer composition as claimed in claim 6 and the lubricant as claimed in claim 7.

11. The heat transfer composition of any one of claims 5 to 10 having a Global Warming Potential (GWP) of not greater than 750, and/or
having an Ozone Depletion Potential (ODP) of not greater than 0.05, preferably 0.02, more preferably about zero.

12. A method of cooling in a heat transfer system comprising an evaporator, a condenser and a compressor, the process comprising the steps of i) condensing a heat transfer composition as claimed in any one of claims 5 to 11 and ii) evaporating the composition in the vicinity of body or article to be cooled; wherein the evaporator temperature of the heat transfer system is in the range of from about - 40°C to about - 10°C, or
a method of heating in a heat transfer system comprising an evaporator, a condenser and a compressor, the process comprising the steps of i) condensing a heat transfer composition as claimed in any one of claims 5 to 11, in the vicinity of a body or article to be heated and ii) evaporating the composition; wherein the evaporator temperature of the heat transfer system is in the range of about -30°C to about 5°C,
preferably wherein the heat transfer system is an air conditioning system,
more preferably wherein the air conditioning system is a mobile air conditioning system, particularly an automobile air conditioning system, a mobile heat pump, particularly an electric vehicle heat pump, a chiller, particularly a positive displacement chiller, more particularly an air cooled or water cooled direct expansion chiller, a residential air conditioning system, particularly a ducted split or ductless split air conditioning system, a residential heat pump, a residential air to water heat pump/hydronic system an industrial air conditioning system, a commercial air conditioning system, particularly a packaged rooftop unit or a variable refrigerant flow (VRF) system, and a commercial air source, water source or ground source heat pump system, or
wherein the air conditioning system is a residential air-conditioning system (with an evaporator temperature in the range of about 0 to about 10°C, particularly about 7°C for cooling and/or in the range of about -30 to about 5°C, particularly about 0.5°C for heating), particularly a residential air conditioning system with a reciprocating, rotary (rolling piston or rotary valve) or scroll compressor, or
wherein the air conditioning system is an air cooled chiller (with an evaporator temperature in the range of about 0 to about 10°C, particularly about 4.5°C), particularly an air cooled chiller with a positive displacement compressor, more particular an air cooled chiller with a reciprocating or scroll compressor, or
wherein the air conditioning system is a residential air to water heat pump hydronic system (with an evaporator temperature in the range of about -20 to about 3°C, particularly about 0.5°C) or
wherein the air conditioning system is a residential air to water heat pump hydronic system (with an evaporator temperature in the range of about -30 to about 5°C, particularly about 0.5°C), or
wherein the air conditioning system is a medium temperature refrigeration system (with an evaporator temperature in the range of about -12 to about 0°C, particularly about -8°C), or
wherein the air conditioning system is a low temperature refrigeration system (with an evaporator temperature in the range of about -40 to about -12°C, particularly about - 23°C or preferably about -32°C), or
wherein the air conditioning system is a residential air conditioning system (with an evaporator temperature in the range of about 0 to 10°C), or
wherein the air conditioning system is a residential heat pump system (with an evaporator temperature in the range of about -20 to about 3°C or about -30 to about 5°C, or
wherein the air conditioning system is a commercial air-conditioning system (with an evaporator temperature in the range of about 0 to about 10°C).

13. A method of replacing an existing refrigerant contained in a heat transfer system comprising removing at least a portion of said existing refrigerant from said system, said existing refrigerant being R-410A and replacing at least a portion of said existing refrigerant by introducing into said system, a refrigerant as claimed in any one of claims 1 to 4 or a heat transfer composition as claimed in any one of claims 5 to 11,
preferably wherein the heat transfer system is an air conditioning system selected from the group consisting of a mobile air conditioning system, particularly an automobile air conditioning system, a mobile heat pump, particularly an electric vehicle heat pump, a chiller, particularly a positive displacement chiller, more particularly an air cooled or water cooled direct expansion chiller, a residential air conditioning system, particularly a ducted split or ductless split air conditioning system, a residential heat pump, a residential air to water heat pump/hydronic system an industrial air conditioning system, a commercial air conditioning system, particularly a packaged rooftop unit or a variable refrigerant flow (VRF) system, and a commercial air source, water source or ground source heat pump system.

14. A heat transfer system comprising a compressor, a condenser and an evaporator in fluid communication, and a heat transfer composition as claimed in any one of claims 5 to 11 in said system, said condenser having an operating temperature of from about +20°C to about +70 °C and said evaporator having an operating temperature of from about -40°C to about +10 °C,
wherein the heat transfer system is an air conditioning system, a mobile air conditioning system, particularly an automobile air conditioning system, a mobile heat pump, particularly an electric vehicle heat pump, a chiller, particularly a positive displacement chiller, more particularly an air cooled or water cooled direct expansion chiller, a residential air conditioning system particularly a ducted split or ductless split air conditioning system, a residential heat pump, a residential air to water heat pump/hydronic system an industrial air conditioning system and a commercial air conditioning system, particularly a packaged rooftop unit or a variable refrigerant flow (VRF) system, and a commercial air source, water source or ground source heat pump system,
preferably wherein the heat transfer system is a residential air-conditioning system (with an evaporator temperature in the range of about 0 to about 10°C, particularly about 7°C for cooling and/or in the range of about -30 to about 5°C, particularly about 0.5°C for heating), or
wherein the heat transfer system is is an air cooled chiller (with an evaporator temperature in the range of about 0 to about 10°C, particularly about 4.5°C), particularly an air cooled chiller with a positive displacement compressor, more particular an air cooled chiller with a reciprocating or scroll compressor, or
wherein the heat transfer system is is a residential air to water heat pump hydronic system (with an evaporator temperature in the range of about -20 to about 3°C, particularly about 0.5°C), or
wherein the heat transfer system is is a residential air to water heat pump hydronic system (with an evaporator temperature in the range of about -30 to about 5°C, particularly about 0.5°C), or
wherein the heat transfer system is
a medium temperature refrigeration system (with an evaporator temperature in the range of about -12 to about 0°C, particularly about -8°C), or
wherein the heat transfer system is a low temperature refrigeration system (with an evaporator temperature in the range of about -40 to about -12°C, particularly about -23°C or preferably about -32°C), or
wherein the heat transfer system is a residential air conditioning system (with an evaporator temperature in the range of about 0 to 10°C) or,
wherein the heat transfer system is a residential heat pump system (with an evaporator temperature in the range of about -20 to about 3°C or about -30 to about 5°C, or
wherein the heat transfer system is a commercial air-conditioning system (with an evaporator temperature in the range of about 0 to about 10°C).

15. A use of a heat transfer composition as claimed in any one of claims 5 to 11, in a chiller, or
in a positive displacement chiller, or
in an air cooled chiller, or
in a water cooled direct expansion chiller, or
in stationary air conditioning, or
in residential air conditioning, or
in industrial air conditioning, or
in commercial air conditioning, or
in commercial refrigeration, or
in a commercial refrigerator, or
in a commercial freezer, or
in a vending machine.

16. The use as claimed in claim 15, in commercial air conditioning.

17. The use as claimed in claim 15, in residential air conditioning.

18. The use as claimed in claims 15, in an air-cooled chiller.

## Patentansprüche

1. Kältemittel, bestehend aus einer Mischung von drei Verbindungen, wobei die Mischung aus Folgendem besteht:
von 48 Gew.-% bis 51 Gew.-% Difluormethan (HFKW-32),
von 9,5 Gew.-% bis 11,5 Gew.-% Pentafluorethan (HFKW-125) und
von 36,5 Gew.-% bis 40,5 Gew.-% Trifluoriodmethan (CF₃I),
wobei die Prozentsätze auf dem Gesamtgewicht der drei Verbindungen in der Mischung basieren und wobei die Menge jeder Verbindung um eine Menge von ±2 Gew.-%, vorzugsweise ±1 Gew.-%, bevorzugter ±0,5 Gew.-% variieren kann.

2. Kältemittel nach Anspruch 1, wobei die Mischung aus 50 Gew.-% Difluormethan (HFKW-32),
11,5 Gew.-% Pentafluorethan (HFKW-125) und
38,5 Gew.-% Trifluoriodmethan (CF₃I) besteht,
wobei die Prozentsätze auf dem Gesamtgewicht der drei Verbindungen in der Mischung basieren und wobei die Menge jeder Verbindung um eine Menge von ±2 Gew.-%, vorzugsweise ±1 Gew.-%, bevorzugter ±0,5 Gew.-% variieren kann.

3. Kältemittel nach Anspruch 1, wobei die Mischung aus 48 Gew.-% Difluormethan (HFKW-32),
11,5 Gew.-% Pentafluorethan (HFKW-125) und
40,5 Gew.-% Trifluoriodmethan (CF₃I) besteht,
wobei die Prozentsätze auf dem Gesamtgewicht der drei Verbindungen in der Mischung basieren und wobei die Menge jeder Verbindung um eine Menge von ±2 Gew.-%, vorzugsweise ±1 Gew.-%, bevorzugter ±0,5 Gew.-% variieren kann.

4. Kältemittel nach Anspruch 1, wobei die Mischung aus 48 Gew.-% ±0,5 Gew.-% Difluormethan (HFKW-32),
11,5 Gew.-% ±0,5 Gew.-% Pentafluorethan (HFKW-125) und
40,5 Gew.-% ±0,5 Gew.-% Trifluoriodmethan (CF₃I) besteht,
wobei die Prozentsätze auf dem Gesamtgewicht der drei Verbindungen in der Mischung basieren.

5. Wärmetransferzusammensetzung, umfassend ein Kältemittel nach einem der Ansprüche 1 bis 4,
wobei das Kältemittel vorzugsweise mehr als 40 Gew.-% der Wärmetransferzusammensetzung umfasst.

6. Wärmetransferzusammensetzung, umfassend ein Kältemittel nach einem der Ansprüche 1 bis 4 und eine Stabilisatorzusammensetzung, wobei die Stabilisatorzusammensetzung BHT in einer Menge von etwa 0,001 Gew.-% bis etwa 5 Gew.-% der Wärmetransferzusammensetzung umfasst; oder
wobei die Stabilisatorzusammensetzung aus BHT in einer Menge von etwa 0,001 Gew.-% bis etwa 5 Gew.-% besteht.

7. Wärmetransferzusammensetzung nach Anspruch 5 oder Anspruch 6, ferner umfassend ein Schmiermittel, ausgewählt aus der Gruppe, bestehend aus Polyolester (POEs), Polyalkylenglykolen (PAGs), PAG-Ölen, Silikonölen, Mineralöl, Alkylbenzolen (ABs), Polyvinylethern (PVE) und Poly(alpha-olefin) (PAO).

8. Wärmetransferzusammensetzung nach Anspruch 7, wobei das Schmiermittel ein Polyolester (POE) ist.

9. Wärmetransferzusammensetzung nach Anspruch 7, wobei das Schmiermittel ein Polyvinylether (PVE) ist.

10. Wärmetransferzusammensetzung nach Anspruch 5, wobei
(a) die Wärmetransferzusammensetzung im Wesentlichen aus dem Kältemittel nach einem der Ansprüche 1 bis 4 besteht, oder
(b) Wärmetransferzusammensetzung nach einem der Ansprüche 5 bis 9, wobei die Wärmetransferzusammensetzung im Wesentlichen aus dem Kältemittel nach einem der Ansprüche 1 bis 4 und der Stabilisatorzusammensetzung nach Anspruch 6 besteht, oder
(c) Wärmetransferzusammensetzung nach einem der Ansprüche 5 bis 9, wobei die Wärmetransferzusammensetzung im Wesentlichen aus dem Kältemittel nach einem der Ansprüche 1 bis 4, der Stabilisatorzusammensetzung nach Anspruch 6 und dem Schmiermittel nach Anspruch 7 besteht.

11. Wärmetransferzusammensetzung nach einem der Ansprüche 5 bis 10 mit einem Treibhauspotential (GWP) von nicht mehr als 750 und/oder
mit einem Ozonabbaupotential (ODP) von nicht mehr als 0,05, vorzugsweise 0,02, bevorzugter etwa Null.

12. Verfahren zum Kühlen in einem Wärmetransfersystem, umfassend einen Verdampfer, einen Kondensator und einen Kompressor, wobei das Verfahren die Schritte umfasst: i) Kondensieren einer Wärmetransferzusammensetzung nach einem der Ansprüche 5 bis 11 und ii) Verdampfen der Zusammensetzung in der Nähe eines zu kühlenden Körpers oder Gegenstands; wobei die Verdampfertemperatur des Wärmetransfersystems im Bereich von etwa -40 °C bis etwa -10 °C liegt, oder
Verfahren zum Erwärmen in einem Wärmetransfersystem, umfassend einen Verdampfer, einen Kondensator und einen Kompressor, wobei das Verfahren die Schritte umfasst: i) Kondensieren einer Wärmetransferzusammensetzung nach einem der Ansprüche 5 bis 11 in der Nähe eines zu erwärmenden Körpers oder Gegenstands und ii) Verdampfen der Zusammensetzung; wobei die Verdampfertemperatur des Wärmetransfersystems im Bereich von etwa -30 °C bis etwa 5 °C liegt,
wobei das Wärmetransfersystem vorzugsweise eine Klimaanlage ist,
wobei die Klimaanlage bevorzugter eine mobile Klimaanlage, insbesondere eine Automobilklimaanlage, eine mobile Wärmepumpe, insbesondere eine Wärmepumpe für Elektrofahrzeuge, eine Kältemaschine, insbesondere eine Verdrängungskältemaschine, insbesondere ein luftgekühlter oder wassergekühlter Direktexpansionskühler, eine Wohnraumklimaanlage, insbesondere eine geteilte Abluft- oder kanallose geteilte Klimaanlage, eine Wohnraumwärmepumpe, ein Wohnraum-Luft-Wasser-Wärmepumpen-/Hydroniksystem, eine industrielle Klimaanlage, eine gewerbliche Klimaanlage, insbesondere eine gepackte Aufdacheinheit oder ein System mit variablem Kältemittelfluss (VRF-System) und ein gewerbliches Luft-, Wasser- oder Erdwärmepumpensystem ist, oder
wobei die Klimaanlage eine Wohnraumklimaanlage ist (mit einer Verdampfertemperatur im Bereich von etwa 0 bis etwa 10 °C, insbesondere etwa 7 °C, zum Kühlen und/oder im Bereich von etwa -30 bis etwa 5 °C, insbesondere etwa 0,5 °C zum Erwärmen), insbesondere eine Wohnraumklimaanlage mit einem Hubkolben-, Dreh-(Rollkolben- oder Drehschieber-) oder Spiralkompressor, oder
wobei die Klimaanlage eine luftgekühlte Kältemaschine (mit einer Verdampfertemperatur im Bereich von etwa 0 bis etwa 10 °C, insbesondere etwa 4,5 °C), insbesondere eine luftgekühlte Kältemaschine mit einem Verdrängungskompressor, insbesondere eine luftgekühlte Kältemaschine mit Hubkolben- oder Spiralkompressor ist, oder wobei die Klimaanlage ein Wohnraum-Luft-Wasser-Wärmepumpen-/Hydroniksystem (mit einer Verdampfertemperatur im Bereich von etwa -20 bis etwa 3 °C, insbesondere etwa 0,5 °C) ist, oder
wobei die Klimaanlage ein Wohnraum-Luft-Wasser-Wärmepumpen-/Hydroniksystem (mit einer Verdampfertemperatur im Bereich von etwa -30 bis etwa 5 °C, insbesondere etwa 0,5 °C) ist, oder
wobei die Klimaanlage ein Mitteltemperatur-Kühlsystem (mit einer Verdampfertemperatur im Bereich von etwa -12 bis etwa 0 °C, insbesondere etwa -8 °C) ist, oder
wobei die Klimaanlage ein Niedertemperatur-Kühlsystem (mit einer Verdampfertemperatur im Bereich von etwa -40 bis etwa -12 °C, insbesondere etwa -23 °C oder vorzugsweise etwa -32 °C) ist, oder
wobei die Klimaanlage eine Wohnraum-Klimaanlage (mit einer Verdampfertemperatur im Bereich von etwa 0 bis 10 °C) ist, oder
wobei die Klimaanlage ein Wohnraum-Wärmepumpensystem (mit einer Verdampfertemperatur im Bereich von etwa -20 bis etwa 3 °C oder etwa -30 bis etwa 5 °C ist, oder
wobei die Klimaanlage eine gewerbliche Klimaanlage (mit einer Verdampfertemperatur im Bereich von etwa 0 bis etwa 10 °C) ist.

13. Verfahren zum Ersetzen eines vorhandenen Kältemittels, das in einem Wärmetransfersystem enthalten ist, umfassend das Entfernen mindestens eines Teils des vorhandenen Kältemittels aus dem System, wobei das vorhandene Kältemittel R-410A ist, und das Ersetzen mindestens eines Teils des vorhandenen Kältemittels durch Einbringen eines Kältemittels nach einem der Ansprüche 1 bis 4 oder einer Wärmetransferzusammensetzung nach einem der Ansprüche 5 bis 11 in das System,
wobei das Wärmetransfersystem eine Klimaanlage ist, ausgewählt aus der Gruppe, bestehend aus einer mobile Klimaanlage, insbesondere einer Automobilklimaanlage, einer mobilen Wärmepumpe, insbesondere einer Wärmepumpe für Elektrofahrzeuge, einer Kältemaschine, insbesondere einer Verdrängungskältemaschine, insbesondere einem luftgekühlten oder wassergekühlten Direktexpansionskühler, einer Wohnraumklimaanlage, insbesondere einer geteilten Abluft- oder kanallosen geteilten Klimaanlage, einer Wohnraumwärmepumpe, einem Wohnraum-Luft-Wasser-Wärmepumpen-/Hydroniksystem, einer industriellen Klimaanlage, einer gewerblichen Klimaanlage, insbesondere einer gepackten Aufdacheinheit oder einem System mit variablem Kältemittelfluss (VRF-System) und einem gewerblichen Luft-, Wasser- oder Erdwärmepumpensystem.

14. Wärmetransfersystem, umfassend einen Kompressor, einen Kondensator und einen Verdampfer in Fluidverbindung und eine Wärmetransferzusammensetzung nach einem der Ansprüche 5 bis 11 in dem System, wobei der Kondensator eine Betriebstemperatur von etwa +20 °C bis etwa +70 °C aufweist und der Verdampfer eine Betriebstemperatur von etwa -40 °C bis etwa +10 °C aufweist,
wobei das Wärmetransfersystem eine Klimaanlage, eine mobile Klimaanlage, insbesondere eine Automobilklimaanlage, eine mobile Wärmepumpe, insbesondere eine Wärmepumpe für Elektrofahrzeuge, eine Kältemaschine, insbesondere eine Verdrängungskältemaschine, insbesondere ein luftgekühlter oder wassergekühlter Direktexpansionskühler, eine Wohnraumklimaanlage, insbesondere eine geteilte Abluft- oder kanallose geteilte Klimaanlage, eine Wohnraumwärmepumpe, ein Wohnraum-Luft-Wasser-Wärmepumpen-/Hydroniksystem, eine industrielle Klimaanlage und eine gewerbliche Klimaanlage, insbesondere eine gepackte Aufdacheinheit oder ein System mit variablem Kältemittelfluss (VRF-System) und ein gewerbliches Luft-, Wasser- oder Erdwärmepumpensystem ist,
wobei das Wärmetransfersystem vorzugsweise eine Wohnraumklimaanlage ist (mit einer Verdampfertemperatur im Bereich von etwa 0 bis etwa 10 °C, insbesondere etwa 7 °C, zum Kühlen und/oder im Bereich von etwa -30 bis etwa 5 °C, insbesondere etwa 0,5 °C zum Erwärmen), oder
wobei das Wärmetransfersystem eine luftgekühlte Kältemaschine (mit einer Verdampfertemperatur im Bereich von etwa 0 bis etwa 10 °C, insbesondere etwa 4,5 °C), insbesondere eine luftgekühlte Kältemaschine mit einem Verdrängungskompressor, insbesondere eine luftgekühlte Kältemaschine mit Hubkolben- oder Spiralkompressor ist, oder
wobei das Wärmetransfersystem ein Wohnraum-Luft-Wasser-Wärmepumpen-/Hydroniksystem (mit einer Verdampfertemperatur im Bereich von etwa -20 bis etwa 3 °C, insbesondere etwa 0,5 °C) ist, oder
wobei das Wärmetransfersystem ein Wohnraum-Luft-Wasser-Wärmepumpen-/Hydroniksystem (mit einer Verdampfertemperatur im Bereich von etwa -30 bis etwa 5 °C, insbesondere etwa 0,5 °C) ist, oder
wobei das das Wärmetransfersystem
ein Mitteltemperatur-Kühlsystem (mit einer Verdampfertemperatur im Bereich von etwa -12 bis etwa 0 °C, insbesondere etwa -8 °C) ist, oder
wobei das Wärmetransfersystem ein Niedertemperatur-Kühlsystem (mit einer Verdampfertemperatur im Bereich von etwa -40 bis etwa -12 °C, insbesondere etwa -23 °C oder vorzugsweise etwa -32 °C) ist, oder
wobei das Wärmetransfersystem eine Wohnraum-Klimaanlage (mit einer Verdampfertemperatur im Bereich von etwa 0 bis 10 °C) ist, oder
wobei das Wärmetransfersystem ein Wohnraum-Wärmepumpensystem (mit einer Verdampfertemperatur im Bereich von etwa -20 bis etwa 3 °C oder etwa -30 bis etwa 5 °C ist, oder
wobei das Wärmetransfersystem eine gewerbliche Klimaanlage (mit einer Verdampfertemperatur im Bereich von etwa 0 bis etwa 10 °C) ist.

15. Verwendung einer Wärmetransferzusammensetzung nach einem der Ansprüche 5 bis 11 in einer Kältemaschine oder
in einer Verdrängungskältemaschine oder
in einer luftgekühlten Kältemaschine oder
in einem wassergekühlten Direktexpansionskühler oder
in einer stationären Klimaanlage oder
in einer Wohnraumklimaanlage oder
in einer industriellen Klimaanlage oder
in einer gewerblichen Klimaanlage oder
in einer gewerblichen Kühlung oder
in einem gewerblichen Kühlschrank oder
in einem gewerblichen Gefrierschrank oder
in einem Verkaufsautomaten.

16. Verwendung nach Anspruch 15 in einer gewerblichen Klimaanlage.

17. Verwendung nach Anspruch 15 in einer Wohnraumklimaanlage.

18. Verwendung nach Anspruch 15 in einer luftgekühlten Kältemaschine.

## Revendications

1. Réfrigérant constitué d'un mélange de trois composés, ledit mélange étant constitué de :
de 48 % en poids à 51 % en poids de difluorométhane (HFC-32),
de 9,5 % en poids à 11,5 % en poids de pentafluoroéthane (HFC-125), et
de 36,5 % en poids à 40,5 % en poids de trifluoroiodométhane (CF₃I),
dans lequel les pourcentages sont basés sur le poids total des trois composés dans le mélange, et dans lequel la quantité de chaque composé peut varier d'une quantité de ± 2 % en poids, de préférence ± 1 % en poids, plus préférablement ± 0,5 % en poids.

2. Réfrigérant selon la revendication 1 dans lequel ledit mélange est constitué de 50 % en poids de difluorométhane (HFC-32),
11,5 % en poids de pentafluoroéthane (HFC-125), et
38,5 % en poids de trifluoroiodométhane (CF₃I),
dans lequel les pourcentages sont basés sur le poids total des trois composés dans le mélange, et dans lequel la quantité de chaque composé peut varier d'une quantité de ± 2 % en poids, de préférence ± 1 % en poids, plus préférablement ± 0,5 % en poids.

3. Réfrigérant selon la revendication 1 dans lequel ledit mélange est constitué de 48% en poids de difluorométhane (HFC-32),
11,5 % en poids de pentafluoroéthane (HFC-125), et
40,5% en poids de trifluoroiodométhane (CF₃I),
dans lequel les pourcentages sont basés sur le poids total des trois composés dans le mélange, et dans lequel la quantité de chaque composé peut varier d'une quantité de ± 2 % en poids, de préférence ± 1 % en poids, plus préférablement ± 0,5 % en poids.

4. Réfrigérant selon la revendication 1 dans lequel ledit mélange est constitué de 48 % ±
0,5 % en poids de difluorométhane (HFC-32),
11,5 % ± 0,5 % en poids de pentafluoroéthane (HFC-125), et
40,5 % ± 0,5 % en poids de trifluoroiodométhane (CF₃I),
dans lequel les pourcentages sont basés sur le poids total des trois composés dans le mélange.

5. Composition de transfert de chaleur comprenant un réfrigérant selon l'une quelconque des revendications 1 à 4,
de préférence, dans laquelle le réfrigérant compose plus de 40 % en poids de la composition de transfert de chaleur.

6. Composition de transfert de chaleur comprenant un réfrigérant selon l'une quelconque des revendications 1 à 4 et une composition de stabilisant, dans laquelle la composition de stabilisant comprend du BHT en une quantité d'environ 0,001 % en poids à environ 5 % en poids de la composition de transfert de chaleur, ou
dans laquelle la composition de stabilisant constitué du BHT en une quantité d'environ 0,001 % en poids à environ 5 % en poids.

7. Composition de transfert thermique selon la revendication 5 ou la revendication 6 comprenant en outre un lubrifiant choisi dans le groupe constitué des esters de polyol (POE), des polyalkylène glycols (PAG), des huiles PAG, des huiles de silicone, d'une huile minérale, des alkylbenzènes (AB), des éthers polyvinyliques (PVE) et une poly(alpha-oléfine) (PAO).

8. Composition de transfert de chaleur selon la revendication 7 dans laquelle le lubrifiant est un ester de polyol (POE).

9. Composition de transfert de chaleur selon la revendication 7 dans laquelle le lubrifiant est un éther polyvinylique (PVE).

10. Composition de transfert de chaleur selon la revendication 5 dans laquelle
(a) la composition de transfert de chaleur est essentiellement constituée du réfrigérant selon l'une quelconque des revendications 1 à 4 ou
(b) la composition de transfert de chaleur selon l'une quelconque des revendications 5 à 9 dans laquelle la composition de transfert de chaleur est essentiellement constituée du réfrigérant selon l'une quelconque des revendications 1 à 4 et de la composition de stabilisant selon la revendication 6, ou
(c) la composition de transfert de chaleur selon l'une quelconque des revendications 5 à 9 dans laquelle la composition de transfert de chaleur est essentiellement constituée du réfrigérant selon l'une quelconque des revendications 1 à 4, de la composition de stabilisant selon la revendication 6 et du lubrifiant selon la revendication 7.

11. Composition de transfert de chaleur selon l'une quelconque des revendications 5 à 10 ayant un potentiel de réchauffement global (PRG) non supérieur à 750, et/ou
ayant un potentiel de déplétion ozonique (PDO) non supérieur à 0,05, de préférence 0,02, plus préférentiellement d'environ zéro.

12. Procédé de refroidissement dans un système de transfert de chaleur comprenant un évaporateur, un condenseur et un compresseur, le procédé comprenant les étapes de i) condensation d'une composition de transfert de chaleur selon l'une quelconque des revendications 5 à 11 et ii) évaporation de la composition à proximité d'un corps ou d'un article à refroidir ; dans lequel la température de l'évaporateur du système de transfert de chaleur est dans la plage d'environ -40 °C à environ -10 °C, ou
procédé de chauffage dans un système de transfert de chaleur comprenant un évaporateur, un condenseur et un compresseur, le procédé comprenant les étapes de i) condensation d'une composition de transfert de chaleur selon l'une quelconque des revendications 5 à 11, à proximité d'un corps ou d'un article à chauffer et ii) évaporation de la composition ; dans lequel la température de l'évaporateur du système de transfert de chaleur est dans la plage d'environ -30 °C à environ 5 °C,
de préférence dans lequel le système de transfert de chaleur est un système de climatisation,
plus préférentiellement dans lequel le système de climatisation est un système de climatisation mobile, en particulier un système de climatisation automobile, une pompe à chaleur mobile, en particulier une pompe à chaleur pour véhicule électrique, un refroidisseur, en particulier un refroidisseur à déplacement mobile, plus particulièrement un refroidisseur à air ou à eau à détente directe, un système de climatisation résidentiel, en particulier un système de climatisation gainable ou sans conduit, une pompe à chaleur résidentielle, un système de pompe à chaleur/hydronique air-eau résidentiel, un système de climatisation industriel, un système de climatisation commercial, en particulier une unité de toit monobloc ou un système à débit de réfrigérant variable (DRF) et un système de pompe à chaleur commercial aérothermique, aquathermique ou géothermique, ou
dans lequel le système de climatisation est un système de climatisation résidentiel (avec une température de l'évaporateur dans la plage d'environ 0 à environ 10 °C, en particulier d'environ 7 °C pour le refroidissement et/ou dans la plage d'environ -30 à environ 5 °C, en particulier d'environ 0,5 °C pour le chauffage), en particulier un système de climatisation résidentiel avec un compresseur à piston, rotatif (piston roulant ou vanne rotative) ou à spirales, ou
dans lequel le système de climatisation est un refroidisseur à air (avec une température de l'évaporateur dans la plage d'environ 0 à environ 10 °C, en particulier d'environ 4,5 °C), en particulier un refroidisseur à air avec un compresseur à déplacement positif, plus particulièrement un refroidisseur à air avec un compresseur à piston ou à spirales, ou
dans lequel le système de climatisation est un système hydronique de pompe à chaleur air-eau résidentiel (avec une température de l'évaporateur dans la plage d'environ -20 à environ 3 °C, en particulier d'environ 0,5 °C) ou
dans lequel le système de climatisation est un système hydronique de pompe à chaleur air-eau résidentiel (avec une température de l'évaporateur dans la plage d'environ -30 à environ 5 °C, en particulier d'environ 0,5 °C) ou
dans lequel le système de climatisation est un système de réfrigération à température moyenne (avec une température de l'évaporateur dans la plage d'environ -12 à environ 0 °C, en particulier d'environ -8 °C), ou
dans lequel le système de climatisation est un système de réfrigération à basse température (avec une température de l'évaporateur dans la plage d'environ -40 à environ - 12 °C, en particulier d'environ -23 °C ou de préférence d'environ -32 °C), ou
dans lequel le système de climatisation est un système de climatisation résidentiel (avec une température de l'évaporateur dans la plage d'environ 0 à 10 °C), ou
dans lequel le système de climatisation est un système de pompe à chaleur résidentiel (avec une température de l'évaporateur dans la plage d'environ -20 à environ 3 °C ou d'environ -30 à environ 5 °C, ou
dans lequel le système de climatisation est un système de climatisation commercial (avec une température de l'évaporateur dans la plage d'environ 0 à environ 10 °C).

13. Procédé de remplacement d'un réfrigérant existant contenu dans un système de transfert de chaleur comprenant l'élimination d'au moins une partie dudit réfrigérant existant dudit système, ledit réfrigérant existant étant le R-410A et le remplacement d'au moins une partie dudit réfrigérant existant par l'introduction dans ledit système, d'un réfrigérant selon l'une quelconque des revendications 1 à 4 ou d'une composition de transfert de chaleur selon l'une quelconque des revendications 5 à 11,
de préférence dans lequel le système de transfert de chaleur est un système de climatisation choisi dans le groupe constitué d'un système de climatisation mobile, en particulier d'un système de climatisation automobile, d'une pompe à chaleur mobile, en particulier d'une pompe à chaleur pour véhicule électrique, d'un refroidisseur, en particulier d'un refroidisseur à déplacement mobile, plus particulièrement d'un refroidisseur à air ou à eau à détente directe, d'un système de climatisation résidentiel, en particulier d'un système de climatisation gainable ou sans conduit, d'une pompe à chaleur résidentielle, d'un système de pompe à chaleur/hydronique air-eau résidentiel, d'un système de climatisation industriel, d'un système de climatisation commercial, en particulier d'une unité de toit monobloc ou d'un système à débit de réfrigérant variable (DRF) et d'un système de pompe à chaleur commercial aérothermique, aquathermique ou géothermique.

14. Système de transfert de chaleur comprenant un compresseur, un condenseur et un évaporateur en communication fluidique, et une composition de transfert de chaleur selon l'une quelconque des revendications 5 à 11 dans ledit système, ledit condenseur ayant une température de fonctionnement d'environ +20 °C à environ +70 °C et ledit évaporateur ayant une température de fonctionnement d'environ -40 °C à environ +10 °C,
dans lequel le système de transfert de chaleur est un système de climatisation mobile, en particulier un système de climatisation automobile, une pompe à chaleur mobile, en particulier une pompe à chaleur pour véhicule électrique, un refroidisseur, en particulier un refroidisseur à déplacement mobile, plus particulièrement un refroidisseur à air ou à eau à détente directe, un système de climatisation résidentiel, en particulier un système de climatisation gainable ou sans conduit, une pompe à chaleur résidentielle, un système de pompe à chaleur/hydronique air-eau résidentiel, un système de climatisation industriel, un système de climatisation commercial, en particulier une unité de toit monobloc ou un système à débit de réfrigérant variable (DRF) et un système de pompe à chaleur commercial aérothermique, aquathermique ou géothermique,
de préférence dans lequel le système de transfert de chaleur est un système de climatisation résidentiel (avec une température de l'évaporateur dans la plage d'environ 0 à environ 10 °C, en particulier d'environ 7 °C pour le refroidissement et/ou dans la plage d'environ -30 à environ 5 °C, en particulier d'environ 0,5 °C pour le chauffage), ou
dans lequel le système de transfert de chaleur est un refroidisseur à air (avec une température de l'évaporateur dans la plage d'environ 0 à environ 10 °C, en particulier d'environ 4,5 °C), en particulier un refroidisseur à air avec un compresseur à déplacement positif, plus particulièrement un refroidisseur à air avec un compresseur à piston ou à spirales, ou
dans lequel le système de transfert de chaleur est un système hydronique de pompe à chaleur air-eau résidentiel (avec une température de l'évaporateur dans la plage d'environ -20 à environ 3°C, en particulier d'environ 0,5 °C) ou
dans lequel le système de transfert de chaleur est un système hydronique de pompe à chaleur air-eau résidentiel (avec une température de l'évaporateur dans la plage d'environ -30 à environ 5°C, en particulier d'environ 0,5 °C) ou
dans lequel le système de transfert de chaleur est
un système de réfrigération à température moyenne (avec une température de l'évaporateur dans la plage d'environ -12 à environ 0 °C, en particulier d'environ -8 °C), ou
dans lequel le système de transfert de chaleur est un système de réfrigération à basse température (avec une température de l'évaporateur dans la plage d'environ -40 à environ - 12 °C, en particulier d'environ -23 °C ou de préférence d'environ -32 °C), ou
dans lequel le système de transfert de chaleur est un système de climatisation résidentiel (avec une température de l'évaporateur dans la plage d'environ 0 à 10 °C), ou
dans lequel le système de transfert de chaleur est un système de pompe à chaleur résidentiel (avec une température de l'évaporateur dans la plage d'environ -20 à environ 3 °C ou d'environ -30 à environ 5 °C, ou
dans lequel le système de transfert de chaleur est un système de climatisation commercial (avec une température de l'évaporateur dans la plage d'environ 0 à environ 10 °C).

15. Utilisation d'une composition de transfert de chaleur selon l'une quelconque des revendications 5 à 11, dans un refroidisseur, ou
dans un refroidisseur volumétrique, ou
dans un refroidisseur à air, ou
dans un refroidisseur à eau à détente directe, ou
dans la climatisation fixe, ou
dans la climatisation résidentielle, ou
dans la climatisation industrielle, ou
dans la climatisation commerciale, ou
dans la réfrigération commerciale, ou
dans un réfrigérateur commercial, ou
dans un congélateur commercial, ou
dans un distributeur automatique.

16. Utilisation selon la revendication 15, dans la climatisation commerciale.

17. Utilisation selon la revendication 15, dans la climatisation résidentielle.

18. Utilisation selon la revendication 15, dans un refroidisseur à air.
